(19) **Europäisches Patentamt / European Patent Office / Office européen des brevets**

(11) **EP 1 069 706 B1**

(12) **EUROPEAN PATENT SPECIFICATION**

(45) Date of publication and mention
of the grant of the patent:
**05.10.2016 Bulletin 2016/40**

(51) Int Cl.:
*H04B 7/06* *(2006.01)*   *H04B 7/08* *(2006.01)*

(21) Application number: **99401571.7**

(22) Date of filing: **23.06.1999**

(54) **Radio communications apparatus and method with a steerable directional beam antenna**

Funkkommunikationsgerät und -Verfahren mit einer steuerbaren Richtstrahlantenne

Appareil et procédé de communication radio muni d'une antenne à faisceau directionnel orientable

(84) Designated Contracting States:
**AT BE CH CY DE DK ES FI FR GB GR IE IT LI LU MC NL PT SE**

(43) Date of publication of application:
**17.01.2001 Bulletin 2001/03**

(73) Proprietors:
• **TEXAS INSTRUMENTS INC.**
  **Dallas,**
  **Texas 75243 (US)**
  Designated Contracting States:
  **DE FI GB IT NL SE**
• **TEXAS INSTRUMENTS FRANCE**
  **06271 Villeneuve Loubet Cédex (FR)**

(72) Inventor: **Thomas, David R.**
**06650 Opio (FR)**

(74) Representative: **D Young & Co LLP**
**120 Holborn**
**London EC1N 2DY (GB)**

(56) References cited:
**WO-A-96/08850**   **WO-A-97/44978**
**US-A- 5 303 240**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to radio apparatus and radio communications systems, and methods of operation therefor.

Radio communication systems are well known. For example, cellular radio telephone systems are now an established part of many telecommunications networks, and offer the facility of mobile communications to many users.

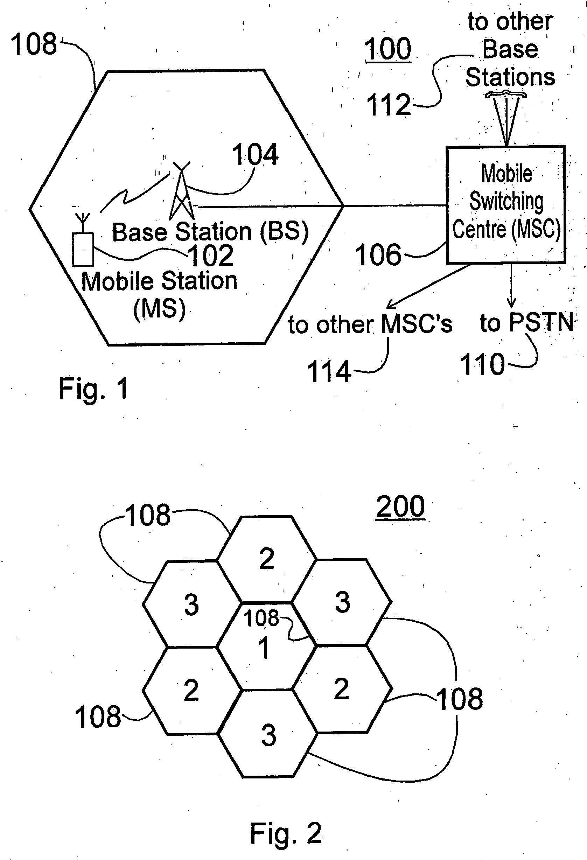

A typical cellular radio telephone system will now be described with reference to Figure. 1. Cellular radio telephone system 100 has three main components: mobile stations (MS) 102 (which term shall be used to include vehicular mounted cellular telephones, portable cellular telephones, and generally radio apparatus used by a subscriber to a radio communications network), base stations (BS) 104, and mobile switching centres (MSC) 106. A mobile station 102 communicates with a base station 104 within a radio cell 108. The base station 104 communicates with the mobile switching centre 106, which routes calls to and from the Public Switched Telephone Network (PSTN) 110, base station 104, other base stations 112 and other mobile switching centres 114. In this manner, a mobile station 102 can communicate with mobile stations in the system, or PSTN subscribers.

In general, a radio communications system, such as a cellular telephone system, has a region of the radio frequency spectrum allocated to it by a national or occasionally an international authority. Since the allocated radio frequency spectrum is limited to a particular frequency range or ranges, cellular radio systems operators maximise the use of the radio spectrum by restricting the coverage area of a base station 104. The coverage area of a base station 104 is generally termed a cell 108. Cells 108 are usually arranged in clusters 200, and the allocated radio spectrum is divided between individual cells in the cluster. Patterns of clusters 200 are repeated throughout the coverage area of the cellular radio system 100. A 7 cell cluster 200 is schematically illustrated in Figure. 2. However, it should be noted that although the cells 108 are shown having a regular hexagonal shape in practice they are irregular due to the non-homogenous propagation of radio waves through typical terrestrial environments, and usually overlap each other.

In order to increase the user capacity of a cellular system it is important to be able to re-use frequencies throughout the cellular system. However, re-use of frequencies is restricted by the need to avoid interference between different cells using the same frequencies, so-called co-channel interference.

Various methods have been employed to reduce co-channel interference and increase system capacity. For example, the base station 104 may transmit adaptive power control signals which dynamically control the mobile station 102 transmit power so that it is kept just above the minimum level necessary to ensure acceptable transmission quality between the mobile station 102 and the base station 104. Additionally, the overall cell size may be reduced, and the level of power transmitted by respective base stations 104 and mobile stations 102 can be correspondingly reduced, in order to allow for greater re-use of the available radio frequency spectrum. However, a reduction in transmit power can lead to reduced quality of reception and consequently reduced data bandwidth since it is likely to be necessary to repeat transmitted data which failed to transmit correctly a first time more often than with a higher transmit power. Additionally, if cells are smaller then it would be necessary to hand-off a mobile radio apparatus, such as a vehicular mounted cellular telephone, frequently. Such frequent hand-offs between cells may put an unacceptable processing overhead on the cellular radio system.

A proposed solution to the above-described drawbacks has been proposed in United States Patent No. 5,303,240 issued 12 April 1994. In this patent it is disclosed that a mobile station, and/or base station may be fitted with a steerable beam antenna. The radio network operates in a Time Division Multiple Access (TDMA) mode, and transmits a "training" signal in a training slot for the mobile station 102. The mobile station scans by sweeping the steerable beam and measuring the received signal quality in each beam direction. Once the best direction (i.e. the direction yielding greatest signal quality) has been assigned, normal communications proceed. Since the beam direction is optimal, a minimal amount of power is required for communication, and thus frequency re-use can be increased. At a later time, if it is determined that the chosen beam direction is not correct or optimal, another direction may be selected. However, the overall system capacity may be reduced since useful time slots, or portions of time slots are being utilised to transmit or receive the training signal. Additionally, a mobile station 102 is likely to change its orientation with respect to the base station 104 frequently, and thus the optimum direction will have changed and the received signal power will have dropped below an acceptable level. In the known proposal, the mobile station 102 sweeps the beam direction in order to re-establish the optimum beam direction. However, such sweeping of the beam direction utilises a significant amount of power and time, and it may become an unacceptable processing overhead should the mobile station 102 change orientation frequently or is at the edge of a cell 108. For a system where the base station 104 comprises a steerable beam antenna, a further problem arises when the mobile station 102 is at the edge of the cell. Should the position of the mobile station 102 change, the base station 104 may lose communication with the mobile station and a new call set up would have to be initiated. However, the base station 104 has to first scan or switch into a omni-directional beam mode to re-establish communication with the mobile station 102. In particular, the omni-directional gain must be sufficient to establish the communications channel with the mobile station 102 despite it being located at the cell edge.

If the omni-directional gain is not sufficient, then the connection may be dropped. Alternatively, increasing the transmit power would reduce the chance of a call being dropped, but would lead to increased power consumption and hence decreased talk/standby time for the mobile station 102.

A further drawback is that existing or conventional base stations would require re-programming and/or new transceiver design in order for them to be able to send/receive training signals and/or require the addition of steerable beam antennas.

The system and apparatus disclosed in United States Patent No. 5,304,240 does not address the problem of a mobile station changing orientation or direction.

The International application WO96/08850 (Philips Electronics) published on 21 March 1996 describes a radio transmission system and radio apparatus (for use in such system) having at least two reception beams: a fixed reception beam and a scanning reception beam. This document does not teach, at least, that control circuitry for a directional beam antenna having a plurality of antenna elements is operable in a second mode (supplementary to first mode in which a beam direction is established and maintained for optimum quality) to scan received signal quality in a direction proximal to the already established optimum beam direction and to update said beam direction for maintaining optimum signal quality or operable in a third mode to configure said directional beam antenna for omni-directional radiation.

WO97/44978 describes a base station of a radio system whose antenna means include: means for receiving signals associated with the same logical channel by at least two antenna beams, measuring means for measuring the signal level of the signals received by the antenna beams, and control means for selecting one or more antenna beams and for supplying the signals of the selected antenna beam to a receiver unit of the base station. In order that the best possible signal would be definitely transmitted to the base station, the base station comprises means for measuring the quality of the signals and for generating a quality signal and for supplying it to the control means, and the control means are arranged to select an antenna beam on the basis of the signal level measured by the measuring means and the quality signal supplied to the control means. This document does not teach, at least, that control circuitry for a directional beam antenna having a plurality of antenna elements is operable in a third mode (supplementary to first mode in which a beam direction is established and maintained for optimum quality and a second mode of scanning received signal quality in a direction proximal to the already established optimum beam direction and to update said beam direction for maintaining optimum signal quality) to configure the directional beam antenna for omni-directional radiation.

The present invention is directed to improving the performance of radio apparatus and radio communications networks such as, for example but not exclusively, cellular radio networks and mobile stations therefor.

Particular and preferred aspects of the invention are set out in the accompanying independent and dependent claims. Combinations of features from the dependent claims may be combined with features of the independent claims as appropriate and not merely as explicitly set out in the appended claims.

In accordance with a first aspect of the present invention, there is provided radio apparatus for a radio communication system, the radio apparatus comprising a directional beam antenna and control circuitry comprising means for determining signal quality and means for directing the antenna beam. The control circuitry is operable in first mode to determine a beam direction for a signal having optimum signal quality and to direct said antenna beam in said beam direction, and in a second mode to update said beam direction for maintaining optimum signal quality.

In accordance with a second aspect of the present invention, there is provided a method of operating radio apparatus including a directional beam antenna for optimising received signal quality, the method comprising in a first mode, determining a beam direction for receiving an optimum signal and directing an antenna beam in said beam direction and in a second mode updating said beam direction for maintaining optimum signal quality.

An advantage of preferred embodiments in accordance with the first and second aspect of the invention is that once the beam direction for optimum signal quality is determined then it can be tracked in the second mode, thereby taking account of changes in orientation of a mobile station, for example.

Furthermore, the apparatus itself determines which mode and in which direction to form an antenna beam, thus being able to adapt to its own environment.

Preferably, the tracking takes places in a second mode by directing the antenna beam in a direction proximal to the beam direction currently determined for optimum signal quality, and to measure the signal quality in that proximal beam direction.

Suitably, the proximal beam direction is adjacent the beam direction for the current optimum signal quality, and typically the antenna beam is directed firstly to one side of the beam direction for optimum signal quality, and then to the other side of that beam direction. In this manner, any changes in the direction of received signals such as may be caused by a change in orientation of a mobile station, for example, can be determined relatively simply.

The apparatus suitably further comprises means adapted to determine a period of transmit inactivity or redundant information and operable to direct said antenna beam and monitor signal quality for said period of transmit inactivity or redundant information. Either one or both of the first and second modes may be operable for the period of transmit inactivity or redundant information.

In a particularly advantageous embodiment of the invention, a period of voice inactivity is determined, during which period the antenna beam is directed and the signal quality measured. Optionally or additionally, a signal representing an End of Data, such as a End of Data Footer utilised in packet data for example, may be identified, and the antenna beam directed and the signal quality measured subsequent to that signal.

A further opportunity for identifying or setting up and tracking an optimum beam direction is during breakdown in the transmission or reception of a large computer/datafile (e.g. text, graphics/audio and/or video streaming) from the Internet, for example. If an unacceptable error level due to burst errors or Raleigh fading occurs during transmission/reception, the data or a portion thereof will have to be re-sent. In such a situation, the information being received is, in effect, non-useful or redundant and, therefore, recalibration or re-setting/tracking of the antenna beam direction may be performed resulting in a net improvement in the performance of the system.

A yet further opportunity for setting up and tracking an optimum beam direction is when a relatively good signal strength is received at a receiver providing good BER/speech quality, for example. In such a situation, re-alignrnent of the antenna beam could take place with any degraded or lost data being handled by the error correction routines in the speech vocode or DSP, for example. Thus, the data would be recoverable whilst the antenna beam direction is optimised.

The foregoing techniques advantageously utilise an inactive period or redundant data period for the radio apparatus for performing the tracking and monitoring of signal quality. Thus, such tracking and measuring is not deleterious to the communications bandwidth or data throughout since it is conducted during the period of inactivity.

In the second mode, the proximal beam direction is set to be a new beam direction for multiple signal quality if the measured signal quality in the proximal beam direction exceeds the signal quality measured in the original beam direction for optimum signal quality. In this way, the beam direction for optimum signal quality may be tracked, thereby providing optimum communication.

In a particularly useful embodiment in accordance with the invention, the apparatus is operable for a cellular radio communication system. Historic information regarding the beam direction for optimum signal direction is stored for a first cell, and is utilised to determine a beam direction for a second cell for handing over the radio apparatus from the first cell to the second cell. The historic information is utilised to evaluate a beam direction for the second cell having a likelihood of providing optimum signal quality for the second cell.

In another particularly advantageous embodiment, historic information regarding the beam direction for optimum signal quality is stored, and extrapolated in order to determine a new beam direction for optimum signal quality. This advantageously "looks ahead" when tracking the direction for optimum signal quality, and provides enhanced tracking.

In accordance with a third aspect of the invention, a directional sensor is utilised for determining a change in direction or orientation of the apparatus. The beam direction for optimum signal quality is modified in response to, and in accordance with, a change in direction of said radio apparatus as determined by the directional sensor. Thus, it is not necessary to track or direct the antenna beam in order to determine optimum signal direction, but merely to respond to the change in orientation of the radio apparatus as determined by the directional sensor. Preferably, the antenna beam for optimum signal quality is then tracked, once the beam has been modified in accordance with the change in direction of the radio apparatus as determined by the directional sensor.

If the change in directional orientation of the apparatus exceeds a predetermined threshold, then operation of the radio apparatus switches to the first mode. Thus, for large changes in direction in which it is likely that the optimum signal beam direction will have been lost, the radio apparatus enters into the first mode in order to begin setting up and finding the optimum beam direction.

Particular embodiments in accordance with the invention will now be described, by way of example only, and with reference to the accompanying drawings in which like reference signs are used to denote like parts, unless otherwise stated, and in which:

Figure 1 is a schematic illustration of the basic elements of a cellular radio telephone system;
Figure 2 is a schematic illustration of a seven cell cluster for a cellular radio telephone system;
Figure 3 is a schematic illustration of a radio telephone handset;
Figure 4 is a block diagram of transceiver and base band circuitry for an embodiment of the invention;
Figure 5 is a block diagram of the circuitry of Figure 4 coupled to an antenna array operable in accordance with an embodiment of the invention;
Figure 6 is a diagrammatic illustration of the operation of a directional (adaptive array) antenna;
Figure 7 is a schematic illustration of a mobile station using a steerable antenna in a radio cell;
Figure 8 is a schematic illustration of a TDMA slot arrangement;
Figure 9 is a schematic illustration of an adaptive antenna array operable in accordance with an embodiment of the invention;
Figure 10 is a schematic illustration of an adaptive antenna array system of an embodiment of the invention;
Figure 11 illustrates a flowchart of the stats for setting up and controlling a directional beam antenna for an embodiment of the invention operable for a GSM, or the like, communication system;

Figure 12A diagrammatically illustrates an omni-directional antenna beam pattern for an antenna operable in accordance with the flowchart of Figure 11;

Figure 12B diagrammatically illustrates a 0° to 180° antenna beam pattern for an antenna operable in accordance with the flowchart of Figure 11;

Figure 12C diagrammatically illustrates a 180° to 360° antenna beam pattern for an antenna operable in accordance with the flowchart of Figure 11;

Figure 12D diagrammatically illustrates a 180° to 270° antenna beam pattern for an antenna operable in accordance with the flowchart of Figure 11;

Figure 12E diagrammatically illustrates a 270° to 360° antenna beam pattern for an antenna operable in accordance with the flowchart of Figure 11;

Figure 13A schematically illustrates an antenna beam direction for a change of orientation of a mobile station relative to the base station;

Figure 13B schematically illustrates directing the antenna beam -30° from the previously assigned optimum direction;

Figure 13C schematically illustrates directing the antenna beam +30° from the previously assigned optimum direction;

Figure 14A schematically illustrates a digital data signal;

Figure 14B schematically illustrates an example of a CDMA spreading code;

Figure 14C schematically illustrates the results of the data signal of Figure 14A modulated by the spreading code of Figure 14B;

Figure 15 is a schematic illustration of a CDMA communication system;

Figure 16 is a schematic illustration of a beam pattern for receiving multipath signals having path lengths approximately equal;

Figure 17 is a schematic illustration of an antenna beam pattern for receiving multipath signals having similar path lengths;

Figure 18 is a schematic illustration of an antenna beam pattern for receiving multipath signals having significantly different path lengths;

Figure 19 is a further illustration of a beam pattern for receiving multipath signals having significantly different path lengths;

Figure 20 is a schematic illustration of a beam pattern for receiving multipath signals having significantly greater path lengths than the primary signal;

Figure 21 illustrates a flowchart of the steps for setting up and controlling a directional antenna for an embodiment of the invention operable for a CDMA or the like, communication system; and

Figure 22 illustrates a flowchart of the steps for setting up and controlling a directional antenna for an embodiment of the invention operable for a CDMA system comprising a directional sensor.

Although the invention finds particular application to cellular radio systems and mobile stations therefor, it also finds application to other radio communication systems and apparatus, for example Public Mobile Radio (PMR), and the terms radio communication system and radio telephone systems include such other systems.

The basic architecture of a cellular radio telephone system has been described above with reference to Figure 1 and Figure 2.

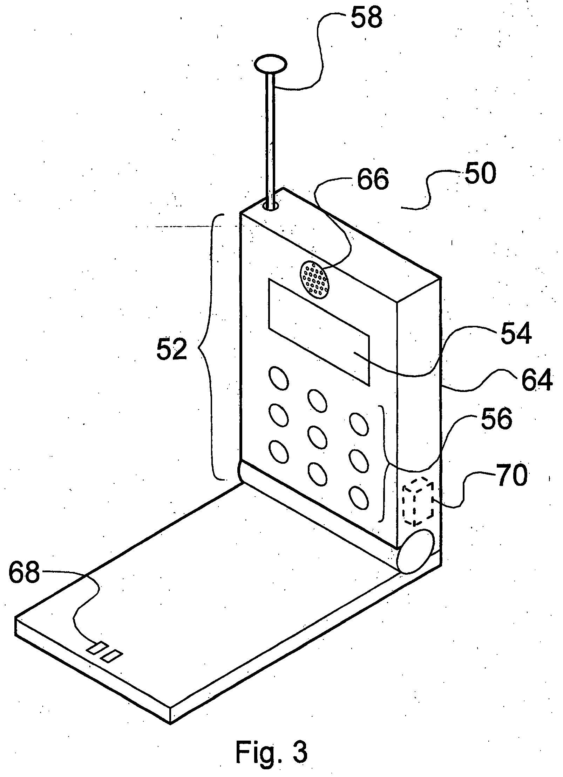

Referring now to Figure 3, there is shown a schematic illustration of a portable telephone handset 50 for a cellular radio system 100. The handset 50 comprises a housing 64, housing a user interface 52 including a display 54, for example a liquid crystal display, and a keypad 56 typically comprising the numerals 0 through to 9 and some special function buttons. Additionally, the user interface comprises acoustic ports 66 and 68, respectively disposed for a speaker and microphone of the handset. The housing 64 also supports an antenna 58 for the handset 50, coupled to a transceiver (not shown) enclosed within the housing 64.

Also enclosed within the housing 64 is a directional sensor 70 for sensing changes in orientation of the handset 50.

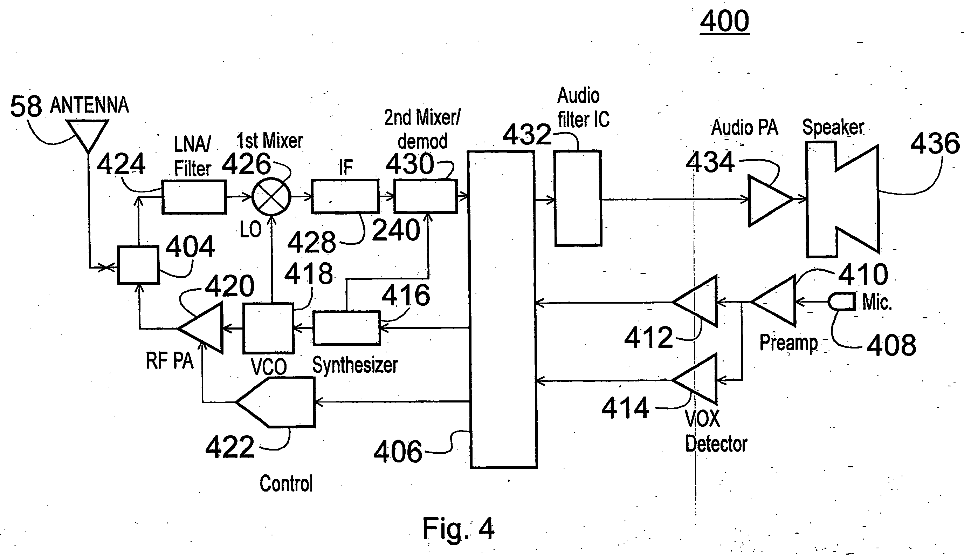

A frequency modulated (FM) transceiver and baseband circuitry suitable for use with the radio telephone handset 50 of Figure 3 and typically enclosed within housing 64, will now be described with reference to Figure 4. The transceiver/baseband circuitry 400 of Figure 4 comprises an antenna 58 coupled to an antenna switch 404. The antenna switch 404 may comprise an electronic switching means for switching between the transmit and receive chain of the transceiver, or a diplexer or duplexer operable to filter different receive and transmit frequencies to the appropriate receive and transmit chains of the transceiver. The transceiver/baseband circuitry 400 is controlled by processing circuitry 406 which may comprise a microprocessor, a digital signal processor or other control circuitry e.g. discrete logic circuitry. Additionally, components of processing circuitry 406 may comprise discrete integrated circuits, or may be combined into a single integrated circuit or as part of a multichip module (MCM).

The transmit chain may be considered to start with microphone 408, the output of which is coupled to audio pre-amplifier 410. The output of the pre-amplifier 410 is coupled to an audio amplifier 412 and a voice activity detector 414. The output from audio amplifier 412 is coupled to the modulation and coding circuitry of processor 406. The output of voice activity detector 414 is coupled to control circuitry of processing circuitry 406, which determines whether or not a voice signal is present at the input to microphone 408.

Processing circuitry 406 outputs a frequency control signal to frequency synthesiser 416, for determining in which channel a signal is transmitted or received.

Additionally, suitably modulated and encoded signals representing speech are output from processing 406 for further modulation and up-conversion for transmission via antenna 58. The channel frequency is typically determined by a control signal received from the base station 104. The allocated radio frequency spectrum is typically divided into radio frequency channels having a bandwidth of about 25 KHz (which is suitable for most speech applications). Often, the up-link channels (from mobile station to base station) are placed in a frequency band separate from the frequency band for the down-link channels (from base station to mobile station). The output of frequency synthesiser 416 is coupled to a voltage controlled oscillator 418. The output of synthesiser 416 may be coupled to the voltage controlled oscillator 418 via a frequency multiplier. Optionally, the output of voltage controlled oscillator 418 may be multiplied by an up-converter. In the transmit chain, the output of voltage controlled oscillator 418 (or a multiple thereof) is coupled to RF power amplifier 420. Additionally, the RF power amplifier 420 receives a control signal from control circuitry 422. Control circuitry 422 acts to control the output of the RF power amplifier 420 in accordance with a desired output power such as may be necessary in a cellular system using adaptive power control. Further, control circuitry 422 may form part of a power control levelling loop, which acts to maintain the output power of the RF power amplifier delivered to the antenna 58 substantially constant. This is achieved by monitoring the output of the RF power amplifier 420 and comparing it with a desired signal output level, and adjusting the bias of the power amplifier under the control of circuitry 422, to maintain the desired level. The RF signal is then switched through antenna switch 404 and transmitted via antenna 58.

The receive chain will now be described in which an RF signal is received by antenna 58 and coupled by antenna switch 404 to a low noise amplifier/filter unit 424. The output of the amplifier/filter unit 424 is coupled to a first mixer 426. Mixer 426 also receives a signal from voltage controlled oscillator 418, under control of frequency synthesiser 416, and outputs an intermediate frequency to an IF filter 428. The immediate frequency filter 428 provides additional frequency selectivity in order to suppress interference from unwanted adjacent channels, and to reduce the effects of any phase noise introduced by the local oscillator signal from the voltage controlled oscillator 418. The intermediate frequency filter 428 is coupled to a second mixer 430, having a second local oscillator 240 input thereto, which downconverts the intermediate frequency signal to baseband, or suitable frequency for processing circuitry 406, under control of the second oscillator signal from the synthesiser 416. The signal from the second mixer 430 is input to the processing circuitry 406 for any further demodulation and decoding.

The audio filter 432, typically comprised in an integrated circuit, receives the demodulated and decoded audio signal from the processor 406. The audio filter 432 is coupled to an audio power amplifier 434 which drives a speaker 436.

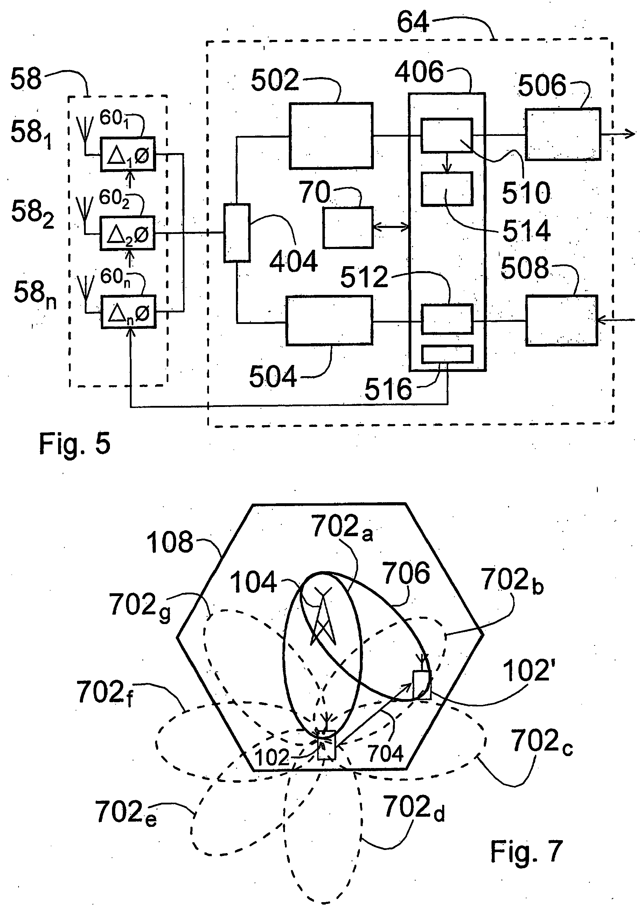

A preferred embodiment in accordance with a first aspect of the invention will now be described with referenced to Figure 5. Radio apparatus housing 64 includes an antenna switch 404 coupled to the radio frequency front end of the receive and transmit chains 502, 504 respectively. The radio frequency front end 502 comprises the low noise amplifier and filter 424, the first mixer 446, intermediate frequency filter 428 and second mixer 430 together with appropriate inputs from the voltage controlled oscillator 418 and frequency synthesizer 416 described in greater detail with reference to Figure 4. Similarly, the radio frequency front end for the transmit chain 504, comprises a radio frequency power amplifier 420, control circuitry 422 for applying power levelling control and modulating the radio frequency carrier input to the radio frequency power amplifier 420, together with appropriate inputs from the voltage controlled oscillator 418 and frequency synthesiser 416 described in greater detail with reference to Figure 4. Processing circuitry 406 comprises a demodulator/decoder unit 510, for demodulating and decoding received signals. The function of the demodulator/decoder 510 is to output signals to the audio output chain 506 comprising the audio filter 432, audio power amplifier 434 and speaker 436. The demodulator/decoder 510 will operate in accordance with demodulation and decoding schemes suitable for the particular radio communications system in which the radio telephone is operating. Since the particular modulation or decoding scheme is not relevant to the instant invention no further reference to such schemes will be made, except to say that the purpose is to output a suitable audio signal. Similarly, the processing circuitry 406 also comprises an encoder/modulator unit 512 which receives an audio/data signal from the audio receive chain 508 and suitably encodes and modulates the signal ready for outputting to the transmit chain radio frequency front end 504. For reasons mentioned above, no further reference will be made to particular encoding/modulation schemes.

Processing circuitry 406 also comprises a signal quality level measuring unit 514, which receives an output from demodulator/decoder 510 representative of the received signal. The signal quality level measurement unit 514 may determine signal quality in a number of ways. For example, the received signal strength may be monitored giving a Received Signal Strength Indicator (RSSI), or the bit error rate, the signal to noise ratio, or carrier to noise ratio of the received signal, may be measured. The receive signal quality level, for example RSSI, may be stored for comparison with a later received signal and/or compared with a threshold level.

The processing circuitry 406 also comprises an antenna beam steering unit 516 for steering the beam of antenna 58. In accordance with a preferred embodiment of the invention antenna 58 comprises a plurality of antenna elements $58_1$, $58_2$..., $58_n$, each antenna element being driven through respective phase delay and gain

circuitry $60_1$, $60_2$, $60_n$,. The phase delay and gain introduced by respective phase delay and gain elements $60_j$ is controlled by antenna beam steering unit 516. Such antenna arrays are often termed "adaptive antennas". The steerable beam antenna 58 need not comprise an electronically steerable beam antenna having a plurality of antenna elements, but may be mechanically steerable, or a combination of mechanically and electrically steerable. Under control of antenna beam steering unit 516, the radiation output from antenna 58 may be formed into a relatively narrow beam, and that beam steered to a desired direction. For typical radio communications system networks the beam need only be steered in the azimuthal direction, that is to say substantially horizontal to the earth's surface. However of course, the elevation of the beam may also be steerable should that be required, although the increased complexity required to provide an extra steerable direction may preclude such a feature on commercial grounds. However, it can be envisaged that certain applications, such as satellite communications applications, may require both azimuthal and elevational steerability.

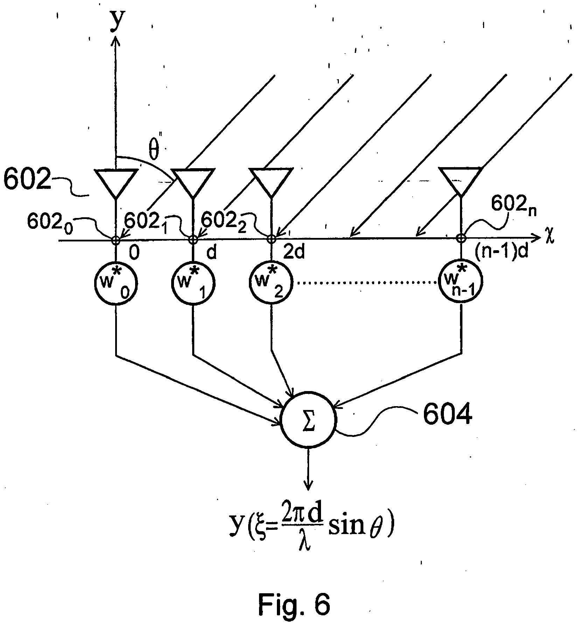

Referring now to Figure 6, there will now be described the basic principles of beam forming using an array of antenna elements.

Figure 6 shows a uniformly spaced linear antenna array 602 with an incident place wave impinging on the array from an angle θ. The incident wave can be described by:

$$E(t, \bar{r}) = E_0 exp[j(\omega t - \bar{k} \bullet \bar{r})]$$

where

$$\bar{k} = \frac{2\pi}{\lambda}(-sin\ \theta \bar{e}_x - cos\ \theta \bar{e}_y)$$

points in the direction of propagation and $\bar{r}$ defines the observation point.

Taking into account the time delay due to plane wave propagation, the signal at the n-th array element 602n relative to the signal at the $0^{th}$ array element is given by

$$x(n) = E_0\ exp[j(\omega t - \frac{2\pi n d\ sin\ \theta}{\lambda})],$$

where d is the inter-element spacing. Thus when d=λ/2, the phase difference between the outputs of adjacent elements produced by a plane wave arriving from a direction of θ is πsinθ.

The fundamental function performed by an adaptive array antenna 602 is to focus a beam in a particular direction for either reception or transmission. The operation of antenna array 602 may be viewed as the spatial counterpart of FIR filtering of a discrete signal in the time domain.

Commonly, the adaptive array 602 forms a linear combination of the signal received at respective antenna elements $602_{1-n}$ in summation unit 604. Associated with each antenna element $602_j$ is a weight wj*, which modifies the phase and/or signal amplitude of the signal received at respective antenna element $602_j$. The set of weights is typically referred to as the steering vector. The steering vector acts as the weights of a spatial filter and determines the gain of the array in a particular direction. In situations where the direction of sources of interference are known, interference mitigation is possible by placing nulls in the antenna pattern in the directions of interference while simultaneously steering the main beam in the direction of the desired signal. A further discussion of beam forming in phased electronically (scanning) arrays may be found in "Antenna Theory-Analysis and Design", C Balanis, Harper & Row, ISBNo. 06-040458-2.

Referring now to Figure 7, there is shown a base station 104 for a cell 108. Typically, the base station 104 radiates in a consistent beam pattern preferably using sectored antennas. Mobile terminals 102 are able to monitor the signal quality from base station 104, and from base stations of adjacent cells in order to determine whether or not the mobile station 102 should hand-off communication with its current base station 104, to an adjacent base station. The mobile station 102 comprises a steerable beam antenna operable to steer the antenna beam 702, through a number of directions $702_a$... $702_g$. Although Figure 7 shows the antenna radiation pattern as being substantially regular in a given direction, it should be noted that Figure 7 is a schematic illustration and in practice the radiation pattern for the antenna will depend upon the nature of the radiating antenna and the surrounding environment.

For mobile station 102 antenna direction 702a provides the best signal quality, and mobile station 102 selects direction 702a after having swept through antenna directions $702_a$. $702_g$. If mobile station 102 should move in a direction 704, whilst maintaining its orientations relative to base station 104, it can been seen that the antenna beam direction for optimal signal quality has altered. Thus, it is necessary for mobile station in the new position 102 to steer the antenna beam on to a new direction to form antenna beam 706.

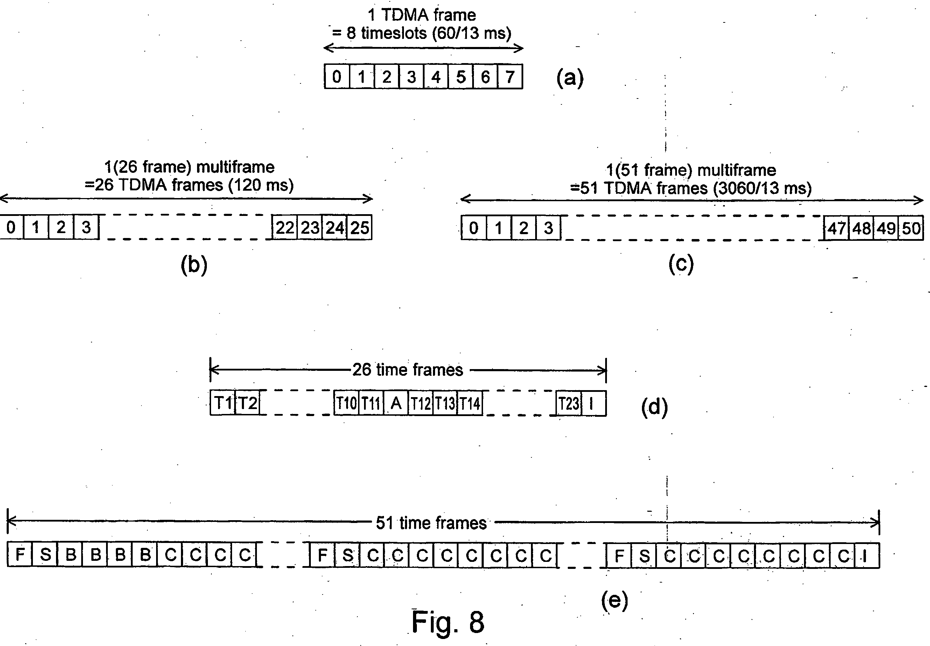

In a preferred embodiment of the invention the radio communications system is a time division multiple access (TDMA) system such as the GSM (Global System for Mobiles) cellular network, as will hereinafter be described with reference to Figure 8.

The GSM cellular telephone network operates over an up-link band of 890 to 915 MHz, and a down-link band of 935 to 960 MHz, and is commonly referred to as GSM 900. An alternative GSM network operates at around 1800 MHz and is termed GSM 1800. The GSM network uses TDMA, and respective up-link and down-links are separated into separate radio frequency channels. The carrier frequency for each channel is separated by 200 KHz from adjacent channels, and each of the radio frequency channels is divided into time slots of approximately 577 microseconds (15000/26 microseconds) duration. These time slots are grouped together in sets of eight consecutive time slots as one TDMA frame. These frames are then grouped together in one of two different ways to form multi-frames. The TDMA structure will now be described with reference to Figure 8.

Figure 8(a) schematically illustrates a single TDMA frame having eight time slots with an overall duration of approximately 4.615 milliseconds, each time slot having a duration of approximately 577 microseconds. Single TDMA frames may be grouped together to form either a 26 TDMA frame multi-frame having an overall duration of 120 milliseconds as shown in Figure 8(b). Alternatively, the single TDMA frame may be combined as illustrated in Figure 8(c) to form a 51 frame multi-frame having a duration of approximately 235.38 milliseconds. Each numbered frame of Figure 8(b) and (c) comprises a single TDMA frame of Figure 8(a). The 26 frame multi-frame illustrated in Figure 8(b) is used for traffic channels and their associated control channels, and has each slot designated as shown in Figure 8(d) where Ti is a time frame number i for traffic data, A is dedicated for the so-called slow associated control channel (SACCH) and I is an idle frame. A 51 TDMA frame multi-frame is used for the control channel and is shown in Figure 8(e), in which; F is a slot dedicated to a frequency correction channel, S indicates a slot for the synchronisation channel, B indicates a broadcast control channel (BCCH), C is for the common control channel and I is an idle frame.

Traffic channels carry either encoded speech or user data, and are transmitted in both the up-link and down-link direction. The control channels are transmitted in the down-link direction only, and carry signalling and synchronisation data between the base station 104 and the mobile station 102.

It is a requirement of the GSM system that the BCCH carrier frequency signal is continuously transmitted in all time slots without variation of the RF power levels, European Telecommunications Standard (ETS) 300 578 "European Digital Cellular Telecommunications System" (phase 2): radio subsystem link control (GSM 05.08), page 18. Maintaining transmission of the BCCH carrier is intended to enable mobile stations to be able to measure the received signal level from surrounding cells by tuning and listening to their respective BCCH carriers. Provided that the mobile station is able to tune to a list of BCCH carriers indicated by the network, it will be able to listen to all possible surrounding cells providing that its list is sufficiently complete. This is useful for the purposes of handover and to determine the appropriate cell with which to communicate based upon the received signal level.

It is known that speech has a non-continuous nature, and that therefore speech channels carry only one direction of the conversation between two people at any one time. Thus, on average the channel will only be carrying speech for less than half the time it is in use. This fact is exploited in GSM by using discontinuous transmission (DTX). In discontinuous transmission only speech frames which contain samples of "active" speech are transmitted. Discontinuous transmission is implemented using a voice activity detector, labelled 414 in Figure 4, to determine when actual speech is present. However, an entirely silent period is disconcerting to a listener since not even background noise associated with the transmitting party is heard. The sudden switching from voice, including background noise, and silence is disturbing to a receiving party. In order to overcome this problem the silent frames are replaced by frames filled with so called "comfort noise" which is set to match the amplitude and spectrum of the background noise. Processing circuitry 406 is adapted to analyse the background noise associated with a transmitting party, in order to determine the comfort noise information. The comfort noise information is then sent in the silent period in so called silence identification (SID) frames, to the receiving party (via base station 104 or mobile station 102) where the noise is regenerated. The "comfort noise" information is sent periodically in the silent period and does not necessarily take up the whole of the silent period. In accordance with embodiments of the invention, advantage is taken of the existence of silent periods, and the periodic or noncontinuous transmission of "comfort noise" information. During silent periods, a mobile station in accordance with an aspect of the invention is able to monitor the BCCH carrier frequency signal in order to determine the received signal quality level, e.g. RSSI.

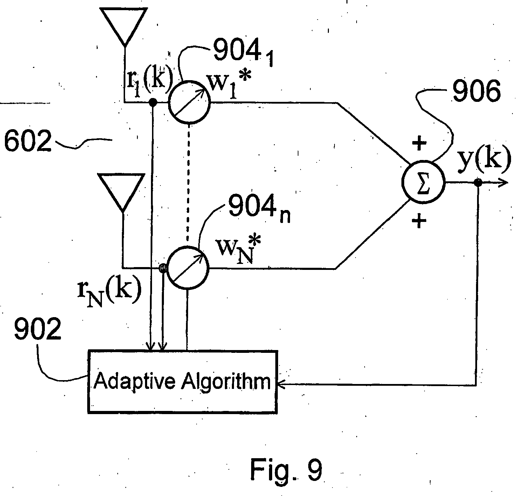

Referring now to Figure 9, there is schematically illustrated a block diagram of an adaptive antenna array 602 controllable by a suitably configured processing means providing control circuitry 902 such as the antenna beam steering unit 516 implemented as a Digital Signal Processor, general purpose microprocessor or logic circuitry. The control circuitry received "raw" or unweighted signals $r_I(k)$-$r_N(k)$ from respective antenna elements. The control circuitry 902 is configured to operate in accordance with an adaptive algorithm, for driving the antenna array 602 and controlling the weighting ($w_j$) circuitry 904. The weighted output from each antenna element is linearly combined in adder 906, to produce an output y(k).

The BCCH carrier signal referred to in connection with the GSM system has a constant power level output. For these types of signals advantage can be take of the *a priori* knowledge of this characteristic and the adaptation algorithm designed to achieve a desired steady state response from the array. For a preferred implementation of the invention, a Constant Modulus Algorithm (CMA) is utilised as the performance criteria that governs the process of adaptively updating the weight vectors $904_i$ of the individual element $602_i$ of the array 602.

The constant modulus adjusts the weight vector 904 of the adaptive array 602 so as to minimise the variation of the envelope of the desired signal at the array. After the algorithm converges, a beam is steered in the direction of the signal of interest, and nulls may be placed in the direction of any interference.

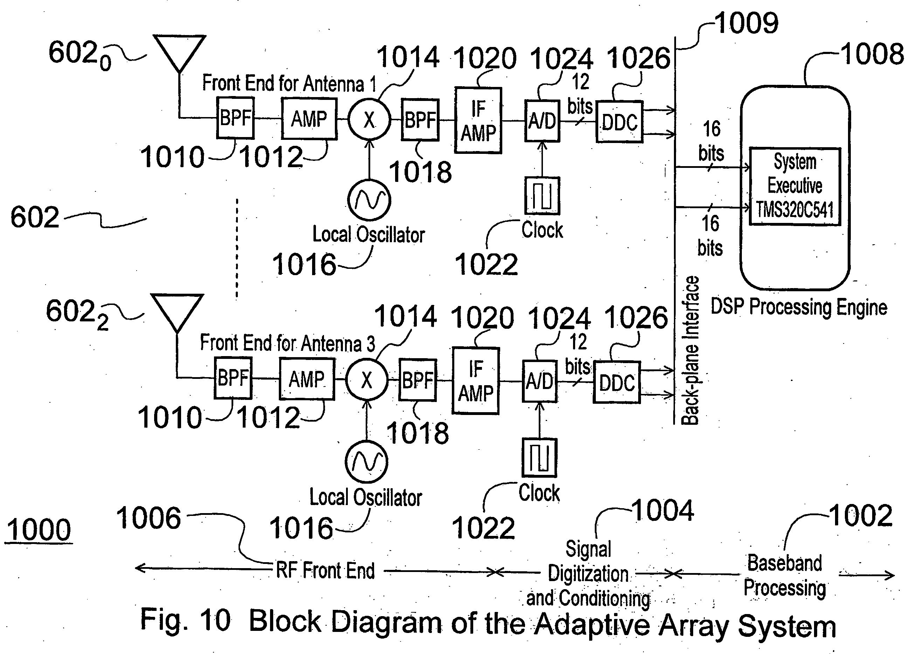

An alternative embodiment in accordance with the invention will now be described with reference to Figure 10, which illustrates an adaptive antenna array system 1000 suitable for including in a mobile station for a radio communications network. The adaptive antenna array system 1000 comprises three basic sections; a baseband processing section 1002, a signal digitisation and conditioning section 1004 and an RF front end 1006. In this embodiment, the adaptive array 602 comprises three antenna elements $602_0$, $602_1$ and $602_2$. The adaptive antenna array system 1000 is controlled by a digital signal processor 1008 of the type TMS320C541 made by Texas Instruments Incorporated. Digital signal processor 1008 controls the baseband processing for the mobile station, including forwarding recovered audio to a speaker, and receiving audio from a microphone input. In addition to performing the baseband processing for the mobile station, digital signal processor 1008 also implements the constant modulus algorithm described above for obtaining a steady state of response from the antenna array 602, thereby tracking the constant level signal such as the BCCH signal of a GSM radio telephone network. Digital signal processor 1008 may also be configured to perform other processes or algorithms, such as a set-up or an initialisation process for establishing communication with a base station of a radio network in advance of tracking the optimum signal from that base station.

Although Figure 10 illustrates the receive path for the adaptive antenna array system, it will be evident to a person of ordinary skill in the art that a transimit path may suitably be constructed using similar or suitably modified elements, based on the principles of reciprocity. The adaptive antenna array system 1000 comprises a,separate signal path corresponding to each of the antenna elements $602_0$... $602_2$. Operation of the adaptive antenna array system 1000 will now be described with reference to one of the received signal paths.

Antenna element $602_0$ is coupled to a first band pass filter 1010, which acts to discriminate a received signal, from other unwanted signals falling outside the received band. The band pass filter signal is forwarded to an amplifier 1012, typically a low noise amplifier, and then forwarded on to mixer 1014. A local oscillator 1016 provides a second input to mixer 1014 and acts to downconvert the received signal to a target intermediate frequency which is then input to a second band pass filter 1018. Band pass filter 1018 acts to discriminate the target intermediate frequency signal, from other co-channel signals and other sources of interference. The intermediate frequency signal is then forwarded to an intermediate frequency amplifier 1020 and then to an analogue digital converter 1024 which is clocked in accordance with system clock 1022. Analogue digital converter 1022 provides a 12 bit output to digital to digital converter 1026. The digital to digital converter 1026 provides a 16 bit input suitable for digital signal processor 1008, over the digital signal processor back-plane interface 1009.

Digital signal processor 1008, operating in accordance with the constant modulus algorithm described above (or other suitable algorithm) controls the beam formed by antenna array 602 to receive the optimum signal. In the adaptive array system 1000 of Figure 10, control of the phase and/or amplitude of signals received for respective antenna elements may be effected by local oscillator 1016. By adjusting the phase and/or amplitude of the local oscillator 1016 signal the digital signal processor 1008 can modify the phase and/or amplitude of the resulting intermediate frequency signal. In accordance with the principle of reciprocity, the same may be achieved in the transmit signal path direction . Thus by appropriately adjusting the local oscillator phase and/or amplitude of respective local oscillators 1016 the weight factors of the adaptive array may be modified.

Optionally, the adaptive antenna array system illustrated in Figure 10 may be modified to have only one received signal path, and to have each antenna element associated with a separate weight adapter, wherein respective signals received by respective antenna elements are summed prior to being forwarded through the rest of the RF front end. Such a configuration is as illustrated in Figure 9. For the configuration of Figure 9, the digital signal processor 1008 would operate directly on the weight factors 904 to adjust the phase and/or amplitude of respective signals received from respective of antenna elements. Although the particular configuration of the adaptive antenna array system may vary, the principle of operation of steering and controlling an adaptive antenna array system will be evident to a person of ordinary skill in the art.

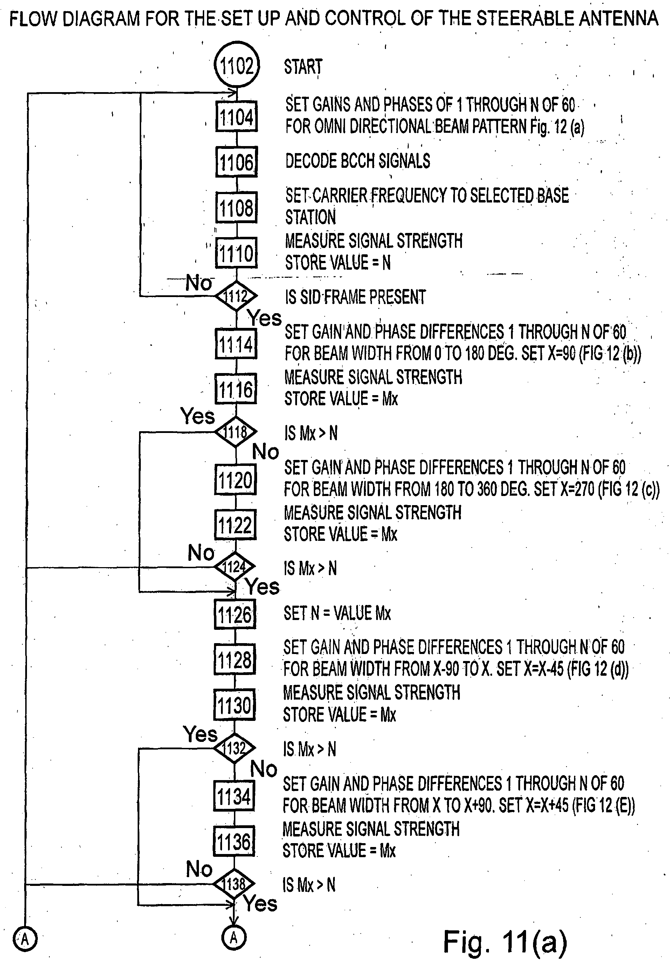

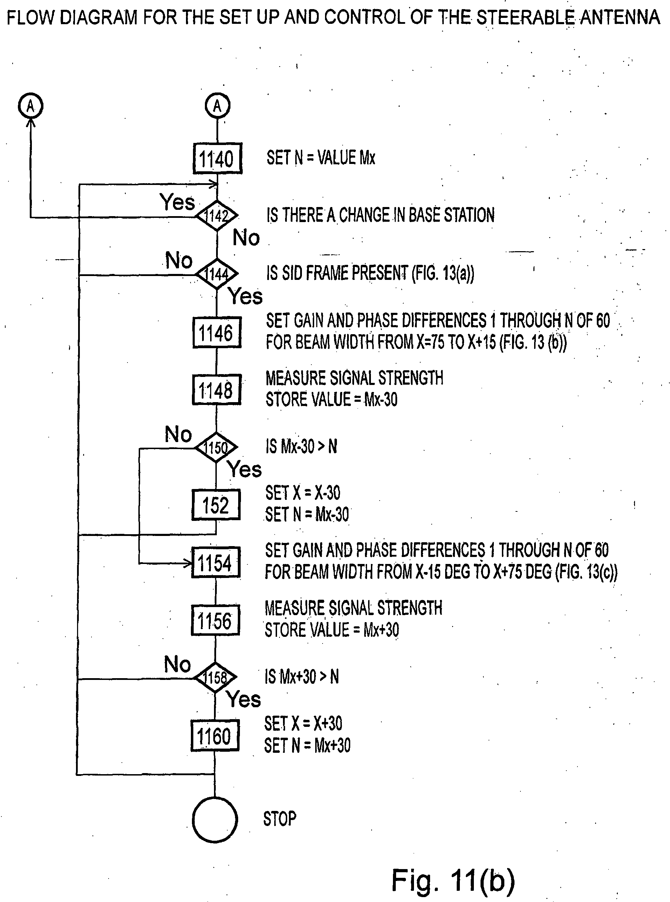

Having now described various embodiments of adaptive antenna array systems and configurations for controlling and forming beams from such antenna arrays, an algorithm for setting up and controlling a steerable antenna in accordance with an embodiment of the present invention suitable for a GSM radio network system or the like, will now be described with reference to the flow chart illustrated in Figure 11.

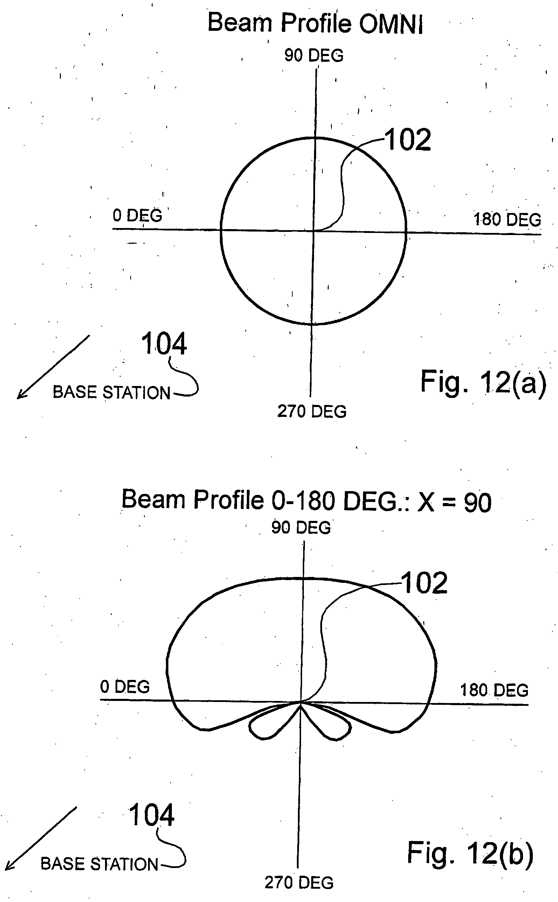

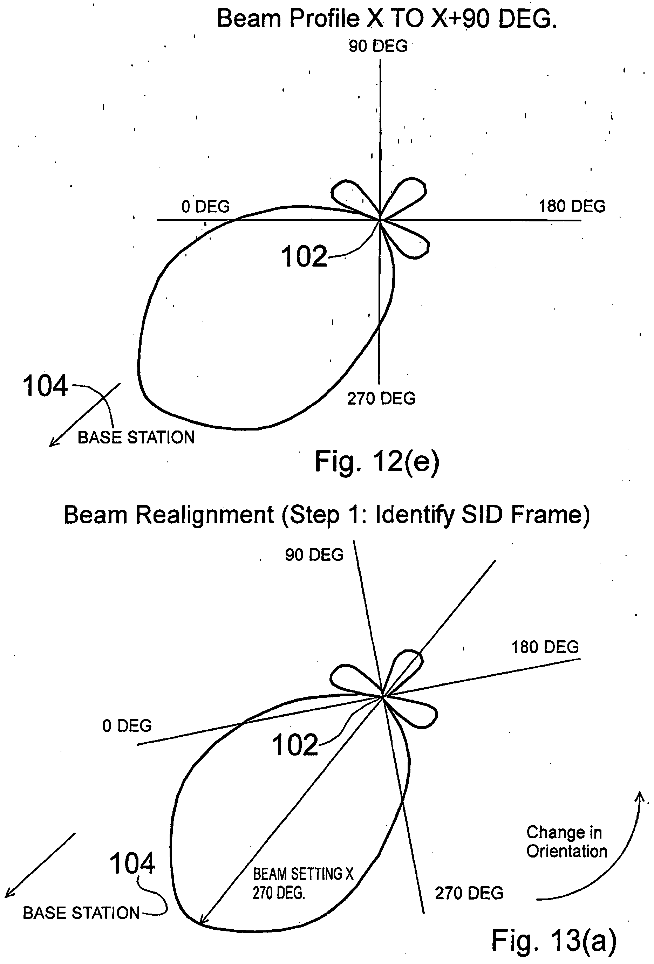

The flow chart of Figure 11 starts at step 1102 to initiate the first mode of operation, and the gain and phase of gain and phase delay circuitry $60_1$... $60_n$ of the embodiment of Figure 5 (or suitable weight factors 904 of the embodiment illustrated in Figure 10) are set for an omni-directional beam pattern as illustrated in Figure 12(a). With an omni-directional beam pattern, a mobile station 102 is able to make communication with a least one base station 104, and typically more than one base station associated with respective cells within whose influence the mobile station 102 is located. At step 1106 the baseband circuitry comprised in the processing circuitry 406 of the embodiment illustrated in Figure 5, or the digital signal processor 1008 of the embodiment illustrated in Figure 10, decode the BCCH signals received from respective base stations in order to determine their signal quality. Typically the measure of signal quality is a measure of the RSSI of the received signal. The mobile station 102 sets its receive carrier frequency to the selected base station, typically that providing the greatest RSSI, at step 1108. At step 1110 the signal quality may be measured again, typically the signal strength, and the value "N" stored.

At step 1112, the mobile station processing circuitry 406 determines whether or not a SID frame is present in the received traffic channel. If no SID frame is present then the process flow may return to step 1102, and the omni-directional beam pattern as illustrated in Figure 12(a) maintained. If a SID frame is present then the yes arm of decision block 1112 is processed and the process flows to step 1114 in which the gain and phase for the gain and phase delay circuitry 60 (weight factors 904) are set for a beam width of zero to 180°, with a bore-sight direction X = 90° relative to a suitable reference plane of the mobile station 102, as illustrated in Figure 12(b). Process control then flows to step 1116 where the RSSI of the received CCH signal from the selected base station is stored as value "Mx". Control of the mobile station 102 then flows to decision block 1118 where it is determined whether or not the stored RSSI value MX is greater than the stored RSSI value N.

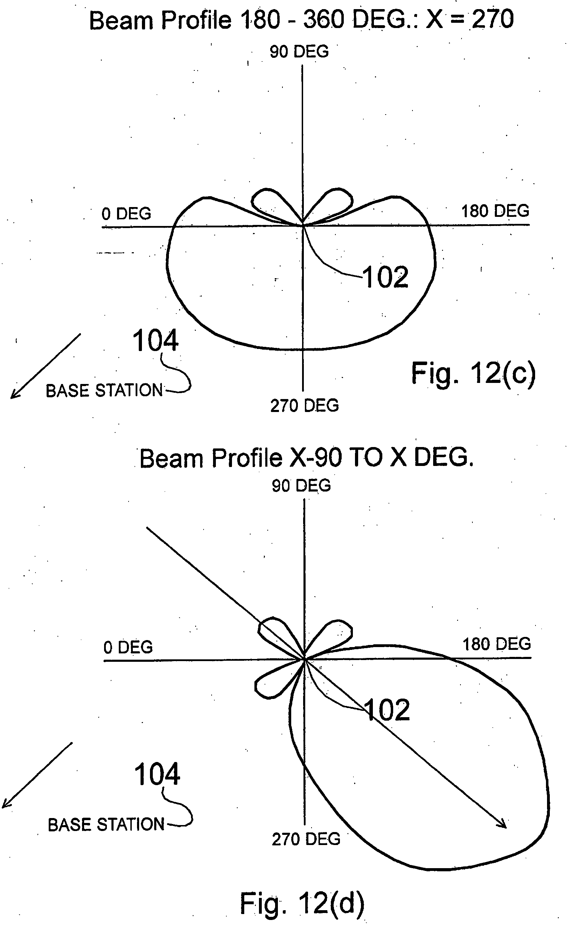

For MX greater than N control flows to step 1126, otherwise control flows to step 1120 where the gain and phase of the gain and phase delay circuitry 60 (weight factors 904) are set for a beam width from 180° to 360°, where the bore sight direction X equals 270° as shown in Figure 12(c). Control then flows to step 1122 where the RSSI value MX of the BCCH signal of the selected base station is stored for the current antenna beam pattern. The stored value MX is then compared with the stored RSSI value N at step 1124. If RSSI value MX is less than N then control flows back to 1104. However, if MX is greater than N then the value of MX is assigned to N, and the new value N is stored at step 1126. Process control then flows to step 1128 where the gain and phase of gain and phase delay circuitry 60, or the weight factors 904, are set to form a beam width from X - 90° to X. A new boresight direction X is then set to equal the previous value for X - 45° as illustrated in Figure 12(d). The process then flows to step 1130 where the RSSI value MX is measured and stored. The process then flows to decision block 1132.

At decision block 1132 the current value of MX is compared with the current value assigned to N to determine whether or not MX is greater than N. If MX is greater than N then flow control jumps to step 1140. Otherwise flow control proceeds to step 1134 where the gain and phase of the gain and phase delay circuitry 60 or weight factors 904, are set to form a beam width of X to X + 90°, where X is assigned a new value equal to the old value X + 45 as shown in Figure 12(d). Control then flows to step 1136 where the RSSI is measured and assigned to MX and stored. Process control then flows to decision block 1138 where it is determined whether or not MX is greater than N. If no, then the process control flows back to the start of the process, step 1104 and if yes flows to step 1140 at which point the current value MX is assigned to N. The process control then flows to decision block 1142.

Process control steps 1102 through to 1140 have initialised and set up the steerable beam antenna for the optimum beam direction for communication with the base station 104 designated for the mobile station 102.

The mobile station 102 now can be configured to operate in a second mode in which the optimum beam direction is tracked in order to maintain optimum communication with the base station as the mobile station 102 changes its orientation with respect to the base station 104. In a preferred embodiment tracking is achieved by steering the beam either side of the recorded optimum signal direction, e.g. $\pm 30°$ to measure signal quality in those directions.

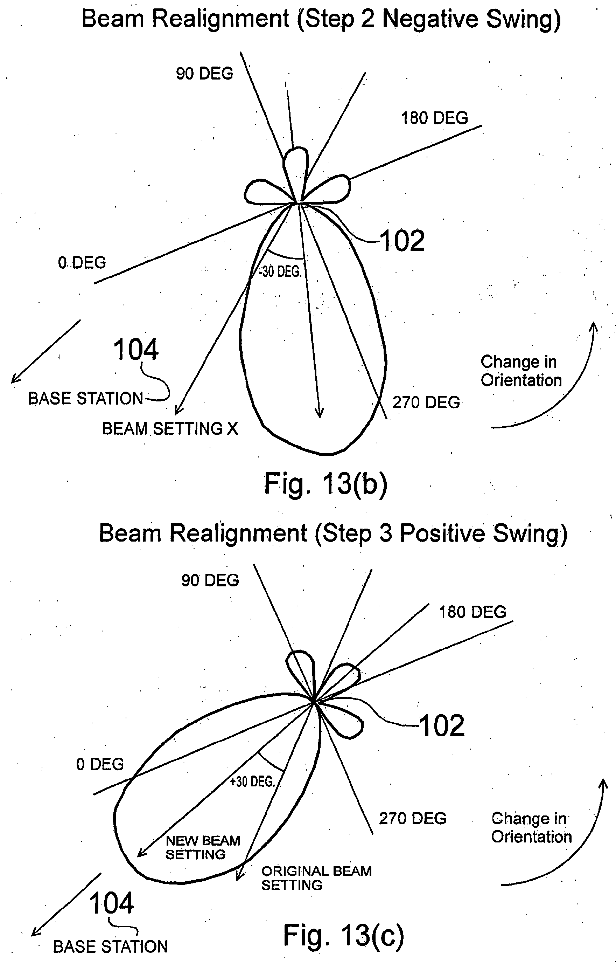

Having established an optimum communication link with a base station, it is necessary to determine whether or not there has been a request to hand off to another base station 104. Such an investigation may be initiated by the fact that the orientation of the mobile station as shown in Figure 13(a) has changed and the antenna beam is no longer pointing directly at the base station 104. If it is determined that the base station has instructed a change in the base station with which the mobile station is communicating, then control of the process returns to the start, step 1102, and the base station either instructs the mobile station to enter the omni-directional mode, or the mobile station does it automatically when instructed to change base station. Then the optimum antenna direction for the new base station is determined. Otherwise, when there is no change in base station, the process control flows to step 1144 where it is determined whether or not a SID frame is present in the traffic signal received by the mobile station 102. If no SID frame is present in the received traffic signal then the process flow control returns to step 1142 where a change in the base station is monitored. Otherwise, the gain and phase delay values for the gain and phase circuitry 60, or the weight factors 904, are set to provide a beam width from X - 75° to X + 15° as shown in Figure 13(b). Process control then flows to step 1148 where the RSSI value $MX_{-30}$ for the direction X - 30° is determined, and stored. At step 1150 it is determined whether or not MX - 30° is greater than N. If yes then at step 1152 X is assigned the value X - 30° and N is set to equal MX - 30.

Process control then flows to step 1142 in order to begin the tracking process again. However, if $MX_{-30}$ is not greater than N then process control flows to step 1154, and the gain and phase of the gain and phase delay circuitry 60, weight factor 904, is set to provide a beamwidth extending from X - 15° to X + 75° as shown in Figure 13(c). The process then flows to step 1156 where the RSSI value MX + 30° for the direction X + 30° is measured and stored. The value MX + 30° is then compared with N to determine which is the greater. If MX + 30° is greater than N then process control flows to step 1160 where X is assigned the value X + 30 and N is assigned the value MX + 30°. Otherwise process control flow returns to step 1142.

An adapter antenna array, or other form of steerable antenna operated in accordance with the foregoing described process is able to identify an optimum beam direction, and track at optimum beam direction as,the orientation of the mobile station is changed.

In the foregoing process the directional beam has been utilised to reject multipath beam reception, that is to say reception of beams which due to the environment and reflections from objects in the environment have taken multiple paths to arrive at the mobile station. In this manner the performance of the mobile station may be significantly improved. Due to the principle of reciprocity, there is a corresponding improvement in the signals received by the base station, or a lower transmit power for the same performance.

It will be appreciated that the process described above for identifying and tracking the optimum antenna beam direction is a "background" process for the mobile station 102, and may be interrupted at appropriate points in order for other operations of the mobile station 102 to be performed.

In an alternative embodiment decision blocks 1118, 1124,1132,1138,1150 and 1158 also comprise a test for whether a SID frame is still present or not. If a SID frame is still present then the process flow continues. However, if a SID frame is not present then the process flow is stalled until a SID frame is present again. As mentioned above, the process flow in this alternative embodiment is a "background" process and may also be stalled at appropriate points in order for other operations of the mobile station 102 to be performed.

The foregoing description is in respect of a GSM radio telephone system. An embodiment of the present invention may also be utilised in a CDMA radio telephone system.

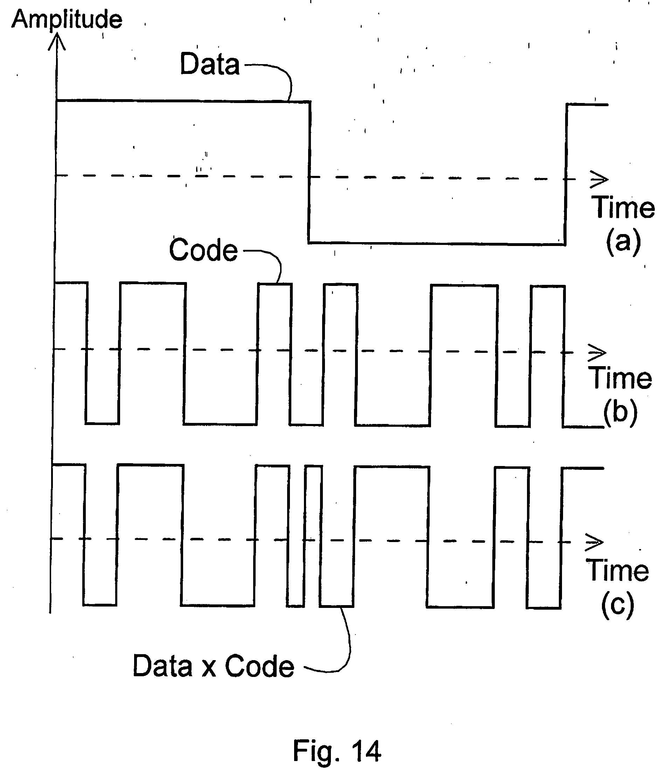

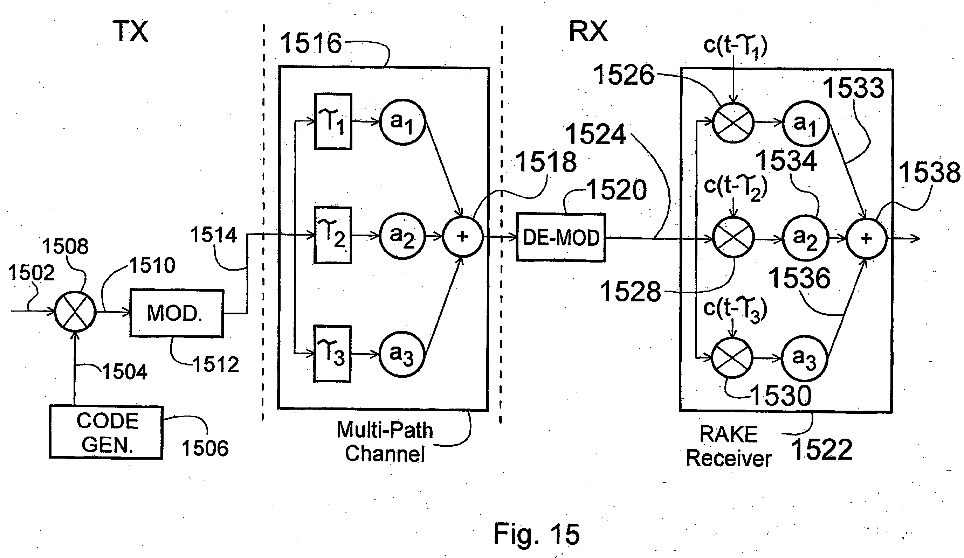

A brief description of the general principles of CDMA will now follow, with reference to Figures 14 and 15 of the drawings. A data signal as shown in Figure 14(a) is modulated by a CDMA spreading code illustrated in Figure 14(b). Although only a data signal is illustrated in Figure 14(a), the data signal may previously have been modulated by an RF carrier signal. However, in the case of a digital signal, it is usually the fact that data modulation is omitted and the data signal is directly multiplied by the code signal which modulates the carrier frequency.

The result of the spreading code multiplied by the data signal is illustrated in Figure 14(c). The code signal consists of a number of code bits called "chips" which can be either +1 or -1. In order to obtain a suitable spreading of the data signal, the chip rate of the code signal must be much higher than the chip rate of the information or data signal. A figure of 10 code chips per data or information signal is a typical ratio, resulting in a processing gain of 10. The spread signal as illustrated in Figure 14(c) is then transmitted.

Referring now to Figure 15, there is provided a simplified diagram of a CDMA system. A data signal 1502 and code signal 1504 originating from code generator 1506 are input to mixer 1508. The spread data signal 1510 is then input to modulator 1512 for modulating a radio frequency carrier. The modulated signal 1514 is then transmitted into the environment which is modelled as a multi-path channel 1516.

In the example illustrated in Figure 15, the radio propagation environment is modelled as three separate channels having different delays $\tau_1$, $\tau_2$ and $\tau_3$ with corresponding attenuation factors $a_1$, $a_2$ and $a_3$. The three separate multi-path signals effectively combine, 1518, at the antenna for the receiver and are forwarded to the demodulator 1520.

The signal from the demodulator is input to a so-called RAKE receiver 1522, which has a finger for each multi-path component it is desired to decode. The signal 1524 output from the demodulator 1520 is split into each of the fingers, 3 in the present example, and forwarded to respective mixers 1526, 1528 and 1530. Input to respective receivers 1516, 1528 and 1530 are respectively delayed spreading codes $C(T-\tau_1)$, $C(T-\tau_2)$ and $C(T-\tau_3)$, where the spreading code C corresponds to that in code generator 1506. The signal output from respective modulators is input to respective gain circuitry $a_1$, $a_2$ and $a_3$, corresponding to the attenuation experienced in the multi-path environment. The attenuated signals 1532, 1534 and 1536 are then combined at 1538 and forwarded to further demodulation and coding circuitry of the receiver.

CDMA systems utilise the reception of multi-path signals, whereat TDMA systems, such as the GSM system described above, seek to reject multi-path signals. A RAKE receiver, such as described with reference to Figure 15, receives the multi-path signals and correlates them with the receiver spreading code in order to coherently combine them to provide a single received signal at the output of the RAKE receiver. In order to optimise a received signal in a CDMA system, the beam pattern may be configured during a beam set-up procedure to take into account the desire to optimise for multipath signals. Once the beam pattern has been defined, then realigning the beam pattern in order to track the optimum confguration for changes in orientation of the mobile station 102 is similar to that as described above for the GSM system. That is to say, the output from the RAKE receiver is monitored in order to maintain maximum received signal strength.

Such a foregoing method is based on the assumption that the mobile station stays substantially in the same position within the multi-path environment whilst changing its orientation. However, if the mobile station 102 should move a sufficient distance within the multi-path environment, such that the direction of the received signals are significantly changed, then it may be necessary to enter a set-up procedure again in order to first find the antenna beam configuration for receiving optimum signal strength, and then subsequently tracking the signal strength as the orientation of the mobile station 102 is varied.

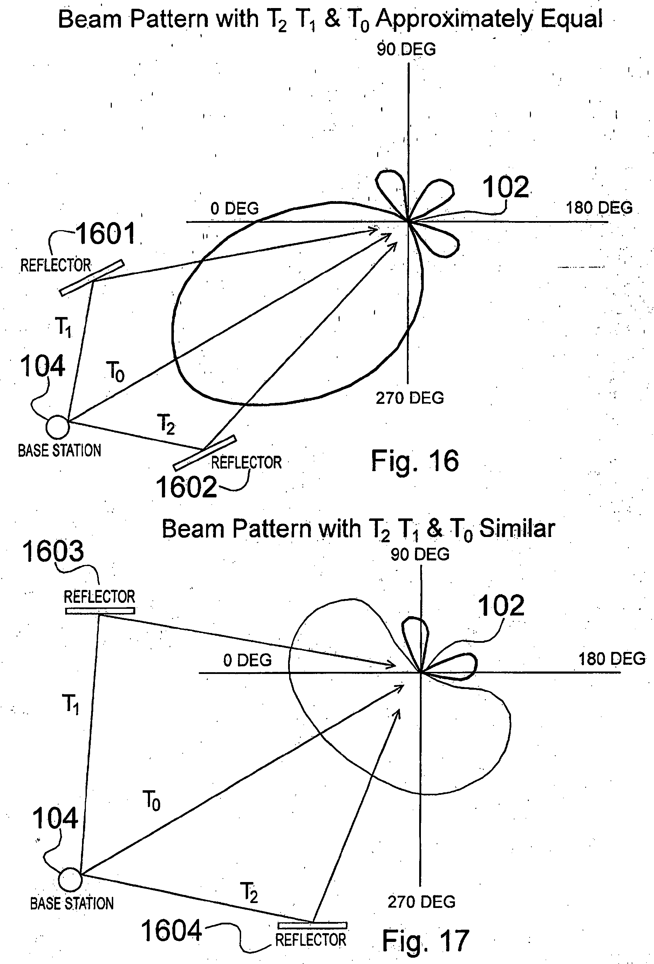

For a mobile station 102 disposed in a multi-path environment, there is a correlation between the delays used in the RAKE receiver for correlating each multi-path signal with the receiver spreading code, and a direction of arrival of the corresponding multi-path signal. Thus it is possible, to at least a first order approximation, for the beam pattern to be configured for maximum received signal strength on the basis of the delays for respective multi-path signals. Examples of suitable beam pattern configurations for various time delays between multi-path signals are illustrated in Figures 16 to 20.

Figure 16 schematically illustrates a MS 102 and BS 104 communicating within a multi-path environment. The multi-path environment is defined by reflectors 1601 and 1602. The MS 102 receives a direct or primary signal $T_0$ and two indirect or reflected signals $T_1$ and $T_2$. The primary signal path $T_0$ will be used as a reference path or signal. In the Example of Figure 16, both the primary signal and reflected signals are incident at the MS 102 from directions within the same sector as the primary path signal $T_0$. Thus, there is a very small difference in the time delays utilised by the RAKE receiver and correlating the reflected signals $T_1$ and $T_2$ with the primary path signal $T_0$. Since the signals all arrive within the same sector as each other, it is possible to configure a single narrow lobe beam pattern for maximising received signal strength. Thus, there is found a correlation between small time delays utilised in the RAKE receiver and a narrow beam-width pattern such as illustrated in Figure 16.

For the multi-path environment illustrated in Figure 17, the reflectors 1603 and 1604 forming multi-paths $T_1$ and $T_2$ respectively, are disposed further away from BS 104 compared to the environment illustrated in Figure 16. Thus, multi-paths $T_1$ and $T_2$ are no longer approximately equal as is the case in Figure 16, but merely similar to path $T_0$. In this instance, the delays applied in the RAKE receiver are greater than those used in the situation illustrated in Figure 16. Additionally, the multi-path signals arrive from a broader angle of direction than before and consequently the beam pattern configuration requires expansion in order to maximise the received signal. Suitably, the beam pattern is a 180° beam pattern having a bore sight substantially on the primary path $T_0$. For a situation such as illustrated in Figure 17, a set of delays applied in the RAKE receiver may be set to correspond to a need for a broad 180° beam pattern.

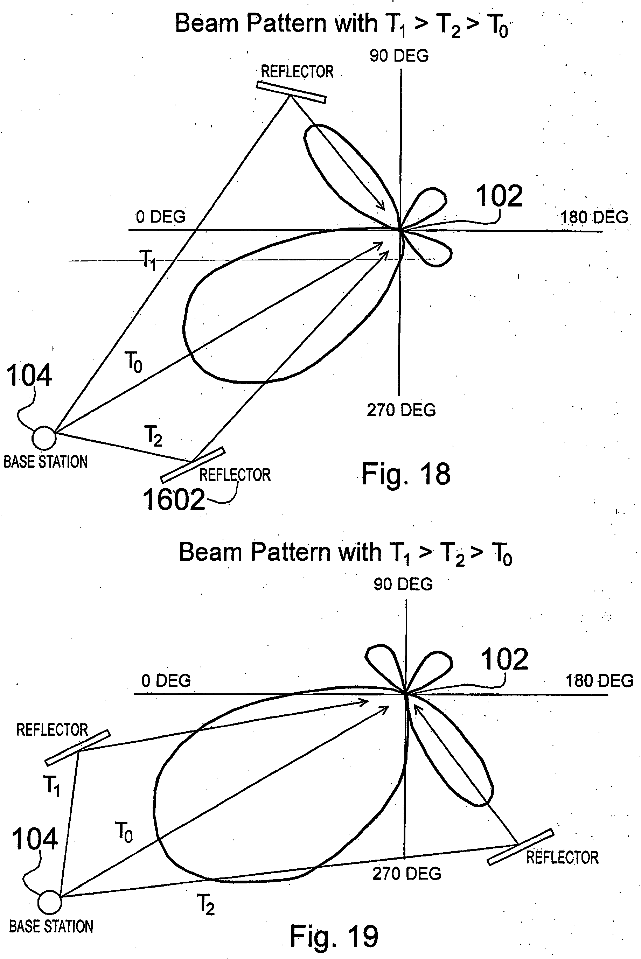

Turning now to Figure 18, there is illustrated a situation where one of the paths, $T_1$ is much greater than the primary signal path $T_0$. Multi-signal path $T_2$ is approximately equal to primary path $T_0$. In the situation illustrat-

ed in Figure 18, the direction of the primary path signal $T_0$ is first identified. The identification of the sector in which the $T_0$ primary path signal occurs may be attained by a suitable setup routine, such as described for the GSM system with reference to the flowchart of Figure 11. For such a setup routine, a relatively narrow beam-width pattern is established in the direction of the greatest received signal strength which becomes the primary path direction. Once the beam pattern for the primary path signal is established, which in the example illustrated in Figure 18 also includes multi-path $T_2$, then the direction of the signal corresponding to a large delay needs to be identified. However, a signal having a delay such as that illustrated in Figure 18 may also comprise a signal path designated $T_2$ in Figure 19. Thus, the delay of the secondary signal in Figures 18 and 19 does not provide information regarding the direction of arrival but only the magnitude of the angle of offset relative to the direct path signal $T_0$. Thus, for signals having a large delay, the antenna beam patterns as illustrated in Figures 18 and 19 should be respectively utilised, and the one with the higher signal strength selected for operation. Thus, signals having large delays correspond to two different antenna beam patterns as illustrated in Figures 18 and 19.

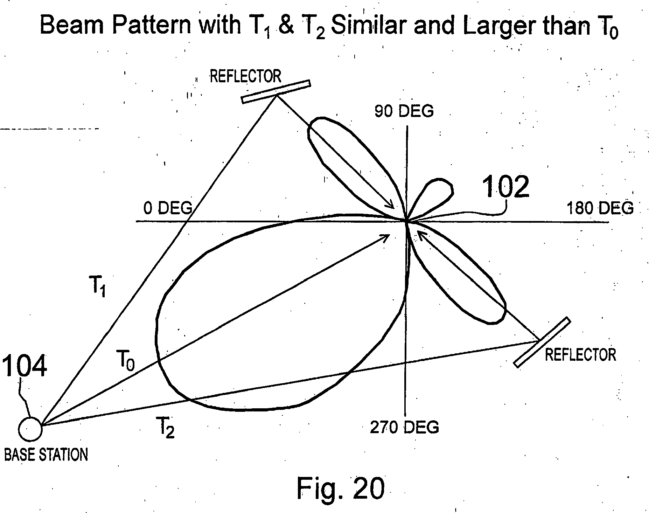

Figure 20 illustrates a situation where both delayed signal paths $T_1$ and $T_2$ arrive at MS 102 from directions which involve considerable delay relative to the direct signal path direction $T_0$. As illustrated in Figure 20, the delays for the signal paths $T_1$ and $T_2$ are effectively a combination of the scenarios illustrated in Figures 18 and 19. However, it is possible that the signal path delays are increased even further and that the delayed signals arrive at the MS 102 from the opposite direction to BS 104, and thus an antenna beam pattern configuration utilising rear lobes is necessary to fully optimise received signal strength.

As will be evident from the foregoing discussion with reference to Figures 16 to 20, it is possible to derive a set of antenna beam configurations for optimising received signal strength, corresponding to the delay(s) utilised by the RAKE receiver when correlating the multi-path signals. Once a suitable beam pattern has been defined, then providing the MS 102 remains substantially in the same place within the multi-path environment, changes in orientation for the MS 102 may be tracked as described with reference to the flowchart of Figure 11. Should the MS 102 change position within the multi-path environment, make a rapid change in orientation or the RAKE receiver delays vary beyond determined limits, it will be necessary to set up the antenna beam configuration for optimum received signal strength again.

The absolute difference between the time of arrival of a primary signal and a multi-path signal, for a given received angle of incidence, is dependent upon the distance between the mobile station 102 and the base station 104. The greater the difference between the mobile station and the base station then the greater the delay between the time of arrival of the primary path signal and the multi-path signal. Thus, relying on the delay alone in order to determine the angle of incidence of a received multi-path signal relative to the primary path signal may result in an error in evaluating the angle of incidence. However, in a CDMA system, the BS 104 operates on receiving signals of substantially the same power level for all MS 102 with which it is communicating. In order to achieve this, the BS 104 transmits power control signals to the MS 102 with which it is communicating, indicating which power level they should be transmitting on, in order for the BS 104 to receive signals having substantially equal power levels. Thus, the MS 102 has information corresponding to the distance from the BS 104 by virtue of the power control level signal received from the BS 104. This distance information may be utilised to normalise the angle of incidence, calculated with respect to the delay, to produce a so-called "spreading factor" A. The spreading factor A normalises the delay information and the distance information derived from the transmitted power level for the MS 102. The spreading factor A can then be utilised as a factor by which the evaluated delay may be multiplied, in order to determine which of a set of predetermined antenna beam patterns should be used to optimise received signal power level. In the present example, the larger the spreading factor A, the smaller the angle of arrival of incidence of the multi-path signal relative to the primary path signal. Thus, for a large spreading factor, a relatively narrow beam pattern (for example 90° beam width) may be utilised. If, however, the spreading factor is small, that is to say the transmit power level from the MS 102 is small indicating that the separation of the MS 102 and BS 102 is small, and the delays applied to the RAKE receiver are large, it will be indicated that the multi-path signals are incident on the MS 102 at large angles of incidence in which instants, one would establish a relatively large beam width antenna pattern, (e.g. 180°). The principle will also apply to situations where there are very large values for the spreading factor A and very large values for the delay applied to the RAKE receiver. In such an incidence, the multi-path signals are incident from behind the MS 102 relative to the direction of the BS 104 and it would be necessary to generate a beam pattern which was either omni-directional or directed to a 270° pattern or to a complex beam pattern such as that shown in Figures 18 to 20.

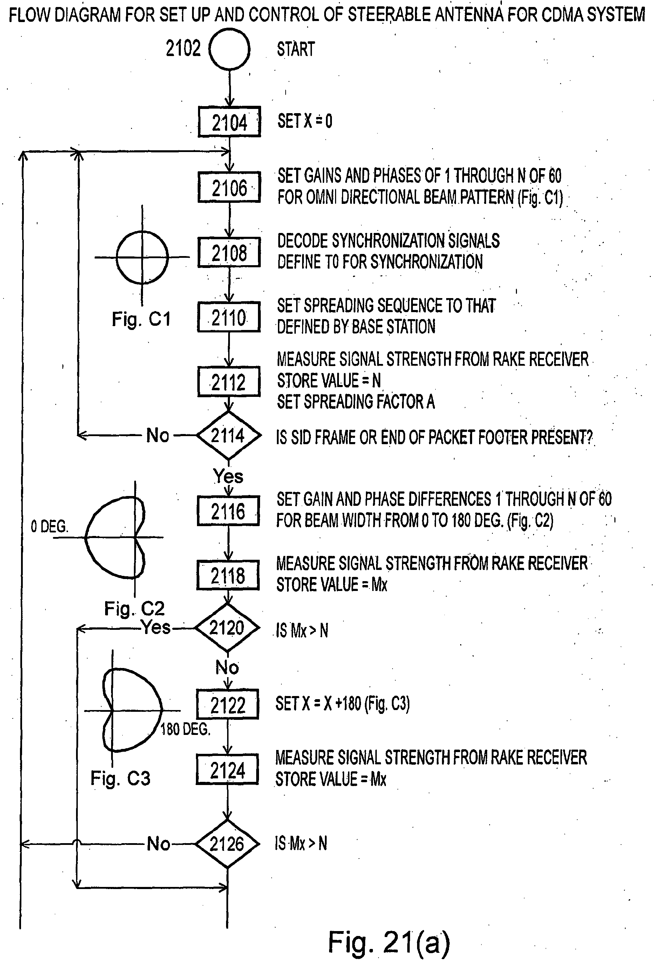

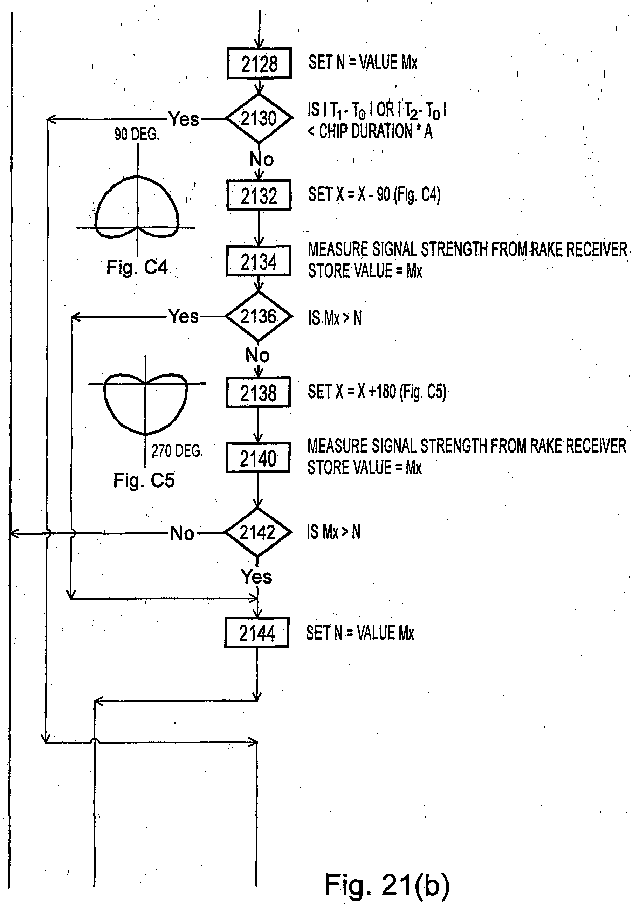

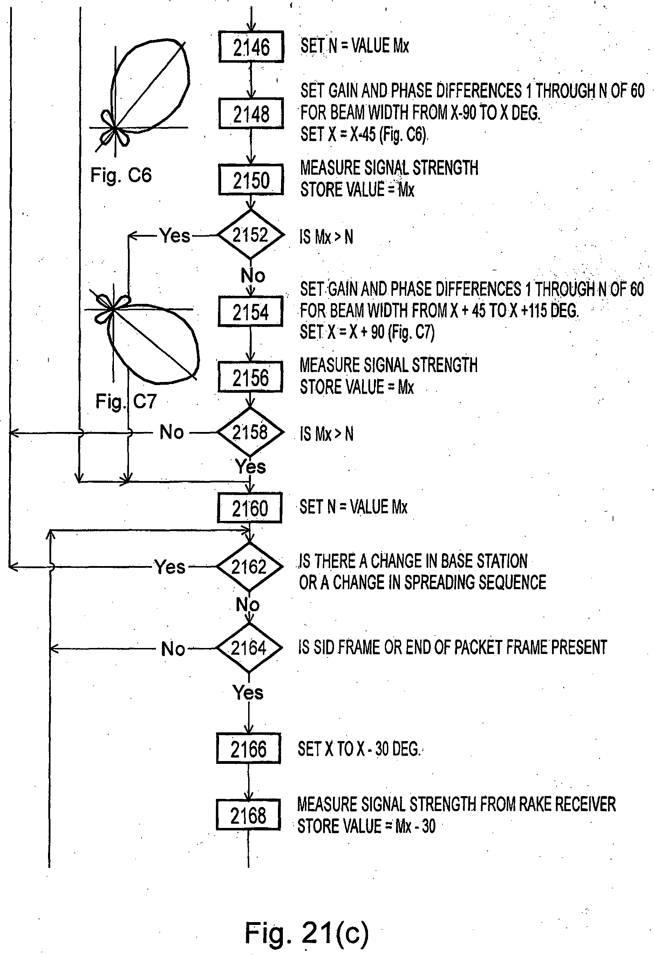

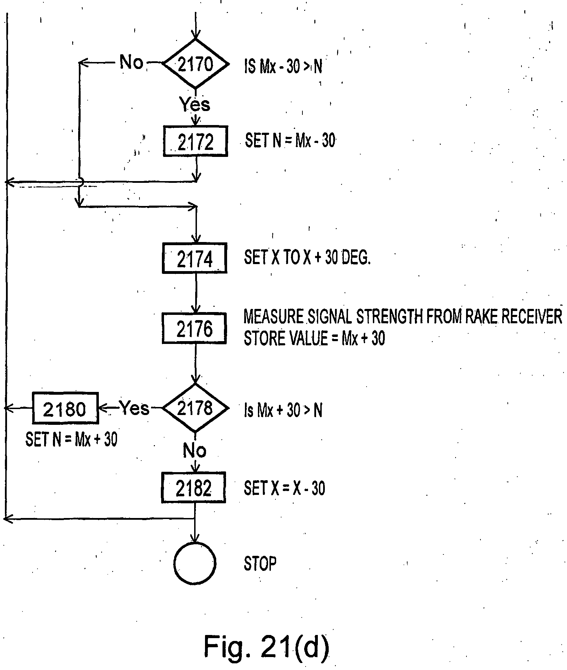

The process for setting up and controlling a steerable antenna for a CDMA system incorporating the use of a spreading factor a, will now be described with reference to the flow chart illustrated in Figure 21.

The process control starts at step 2102 and proceeds to step 2104 where the antenna boresight direction, X, is set to zero. At step 2106, the gain and/or phase of delay elements 60 are set for an omni-directional beam pattern as illustrated in Figure C1. At step 2108, the received synchronisation signals are coded and the primary path $T_0$ is established. Next, step 2110, the spreading sequence for the MS 102 is set to that defined by the base station for the particular communication channel in use. At step 2112, the received signal strength from the output of the RAKE receiver is measured and stored as N. Additionally, the spreading factor A is set. Next, the process control flows to step 2114 at which it is determined whether or not a SID frame or an end-of-packet footer is present in the received information signal. If no such frame or footer is present, then the process flow returns to step 2106. However, if a SID frame or end-of-packet footer is present, then process control flows to step 2116 where the gain and phase differences for the antenna is set to produce an antenna beam pattern having 180° beamwidth and boresight direction of 0° as shown in Figure C2. Next, step 2118, the received signal strength is measured from the output of the RAKE receiver and stored as value MX, where X is the antenna boresight direction.

At step 2120, it is determined whether or not MX is greater than N. If not, then the process control flows to step 2122 where the antenna boresight direction X is set such that X=X+180° to produce the antenna beam pattern as shown in Figure C3. At step 2124, the received signal strength from the output of the RAKE receiver is measured and stored as value MX. Again, at step 2126, the value MX is compared with value N to determine whether or not MX is greater than N. If not, then the process control flows back to step 2106 where determination of a preferred or predominant direction for received signals is restarted. Next, step 2128, the process flow proceeds from step 2126 or a "yes" decision and also from step 2120 for a "yes" result. At step 2128, the value N is set to equal the value MX. At step 2130, it is determined whether or not the delay of one or other of the multi-path signals $T_1$, $T_2$ with respect to the primary signal $T_0$, in absolute terms, is less than the chip duration multiplied by the spreading factor A. The product chip duration multiplied by A is a threshold value for the delays in multi-path signals with respect to primary path signals, and may be derived by relationships other than that illustrated. A "yes" result at step 2130 would indicate that either the delays were small, and thus the multi-path signals were arriving from substantially the same direction as the primary path signal corresponding to the antenna beam button illustrated in Figure C2 or Figure C3 where the primary signal path direction is given by X which in the particular Examples is 0° or 180°. For a "yes" result, the process control flows to step 2146 where it is determined whether or not the beam can be narrowed to focus onto a particular direction for received signals. If the result at step 2130 is "no", then the process control flows to step 2132 where the antenna boresight direction is shifted to 90° as shown in Figure C4, by setting X = X-90°. At step 2134, the signal strength output from the RAKE receiver is measured and stored as value MX. The process control then flows to step 2136 where it is determined whether or not MX is greater than N, the previously stored value of the received signal strength output from the RAKE receiver.

If the result of step 2136 is "yes" then process control flows to step 2144 where N is set to the value MX. If the result from 2136 is "no", then process control flows to step 2138 where the antenna boresight direction is changed to be 270° as shown in Figure C5, by setting X=X+180°. At step 2140, the signal strength output from the RAKE receiver is measured and stored as value MX. At step 2142, it is determined whether or not MX is greater than N. If the result of the step 2142 is "no", process control returns to step 2106, and if the answer is "yes" the process control flows to step 2124 where N is set to equal MX. Thus, it is determined whether the optimum received signal lies in the half-plane having its boresight direction at 90°, or at 270°.

At step 2146, the process flow proceeds for the optimum signal direction having been established as occurring in the half-plane determined by 0° or 180° as shown in Figures C2 and C3, respectively. At step 2146, the value N is set to be value MX, as determined for respective half-planes having boresight 0° or 180°. Process control then flows to step 2148 where the gain and/or phase differences for the elements 60 are set to produce a beamwidth within the quadrant X-90° to X° having a boresight direction along the centre of that quadrant, as shown in Figure C6 with the boresight direction X set to be X-45. At step 2150, the received signal strength output from the rate receiver is measured and stored as value MX. At step 2152 it is determined whether or not MX is greater than N. If the result of step 2152 is "yes" then the process control flows to step 2160, otherwise process control flows to step 2154 where the gain and/or phase differences of element 60 are set for a beamwidth from X to X+90° as shown in Figure C7 with a boresight direction in the centre of the quadrant, such that X=X+45°. At step 2156, the received signal strength output from the RAKE receiver is measured and stored as value MX. At step 2158, it is determined whether or not MX is greater than N. If the result at step 2158 is "no", then the process control flow returns to step 2106, otherwise process control flows to step 2160 where N is set to equal MX. At step 2160, process flow control originates from either step 2158,2152 or 2144.

Process control flows from step 2160 to step 2162 where it is determined whether or not there has been a change in base station or change in the spreading sequence for communication with the base station 102. If the result at step 102 is "yes" then process control returns to step 2166 and the setup process restarts. If the result of step 2162 is "no", then process control flows to step 2164 where it is determined whether or not a SID frame or end-of-packet frame is present in the received data. If the result of step 2164 is "no" then process control returns to step 2162, otherwise, process control flows to step 2166 where the antenna boresight direction X is reset to be X=X-30° and the received signal strength output from the rate receiver is measured at step 2168, and the value stored with the label MX-30. Process control then flows to step 2170 where it is determined whether the value stored under the label MX-30 is greater than N. If the answer is "yes", then at step 2172, N is set to equal the value corresponding to label MX-30. For a result "no", then at step 2174, the antenna boresight direction X is set to be X=X+30°, and at step 2176, the received signal strength output from the RAKE receiver is measured and stored under label MX+30. Next, at step 2178, it is determined whether the value stored under label MX+30 is greater than N. If the answer at step 2178 is "yes", then at step 2180, N is set equal to the value corresponding to MX+30 and process control flows to step 2162. If the answer is "no", then at step 2182, the antenna boresight direction is set to be equal to X=X-30 and process control flows to step 2162.

As can be seen from the flowcharts, steps 2102 to 2160 comprise the antenna beam setup process, and step 2162 to 2182 comprise the steps for tracking the optimum antenna beam direction.

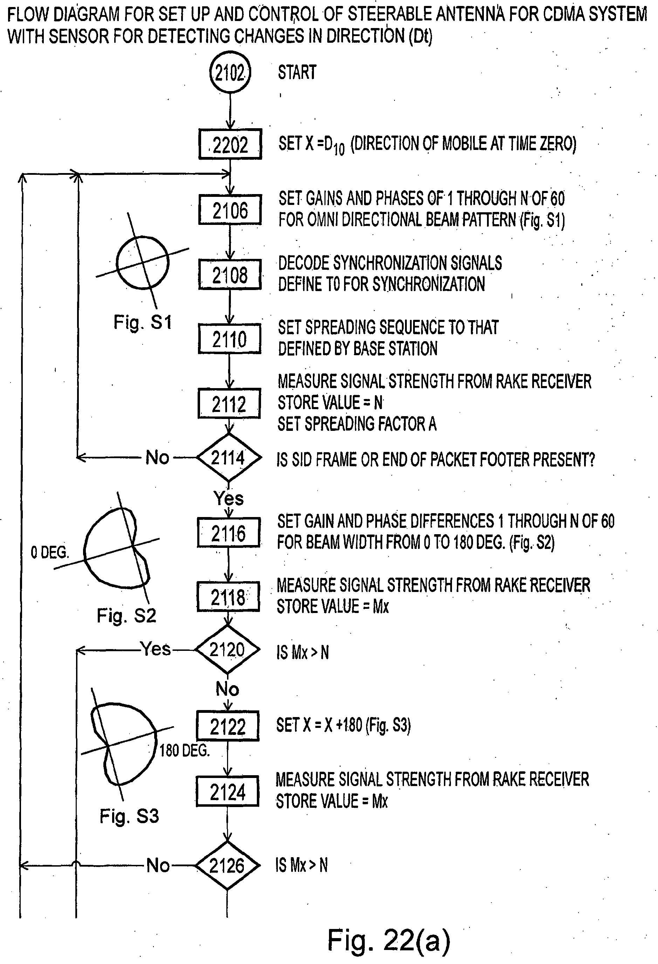

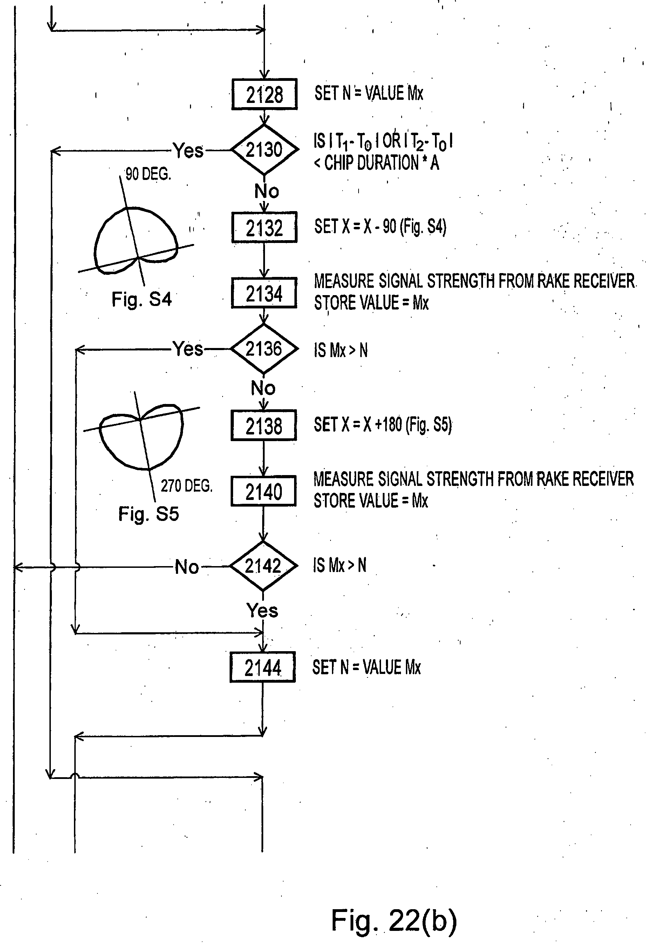

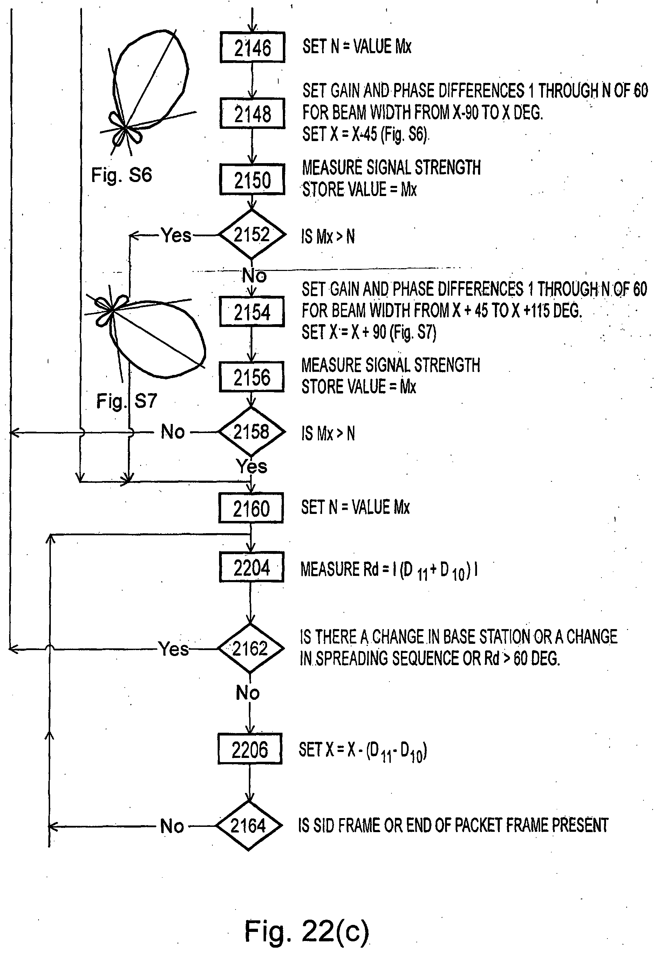

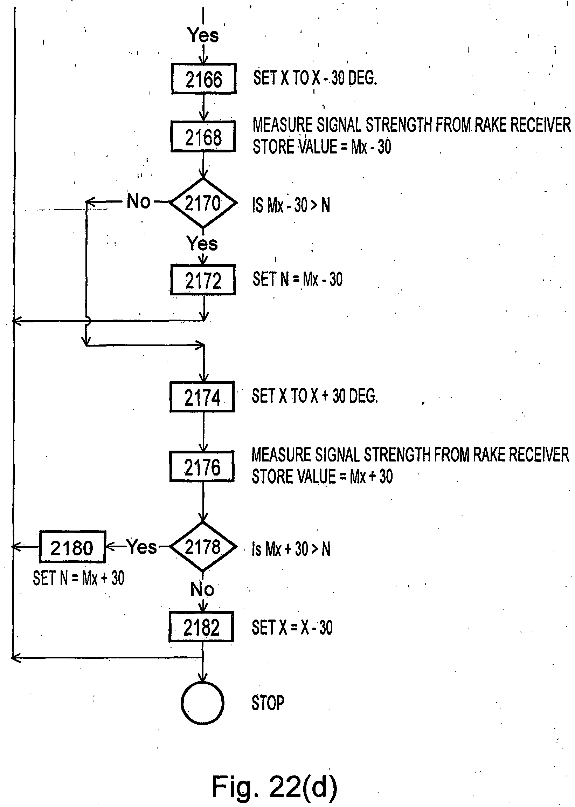

In another Example in accordance with a further aspect of the present invention, a directional sensor 70 is included in the handset 50 of mobile station 102. Sensor 70 is a directional sensor capable of determining a change in azimuthal orientation relative to a starting point. As illustrated in Figure 5, sensor 70 is coupled to microprocessor 406, which receives signals indicative of a change in azimuthal orientation determined by the directional sensor. Microprocessor 406 is operable to receive the signals from sensor 70 and to process them in order that they may be utilised in accordance with an embodiment of the invention for assisting in determining an appropriate beam pattern for receiving an optimum signal. The process for setting up and controlling a steerable antenna in a CDMA system, for a MS102 including a sensor 70 is illustrated in the flowchart of Figure 22. Since many of the steps illustrated in the flowchart of Figure 22 are the same as for the flowchart of Figure 21, like references will be used to identify like steps.

Referring now to Figure 22, after the control process has been initiated at step 2102, the antenna boresight direction X is set to equal $D_{T0}$ which is the orientation of the MS 102 determined by the sensor 70 at a reference time, time 0. Having determined the reference direction by means of a sensor 70, the process flows from step 2106 through to step 2160 in the manner as described with reference to Figure 21. However, after step 2160, another orientation reading is taken at step 2104. The new direction is designated $D_{T1}$, and the change in orientation, Rd is given by the following equation, $Rd=|(D_{T1}-D_{T0})|$. At step 2162, it is determined whether or not there has been a change in the base station, a change in spreading sequence or whether the change in orientation, Rd, is greater than 60°. If the result at step 2162 is "yes" then process control returns to step 2106 where setup of the steerable beam antenna is restarted. If the result of step 2162 is "no", then at step 2206, the antenna boresight direction X is set to be $X=X-(D_{T1}-D_{T0})$. Step 2206 takes into account the effect of the change in orientation as measured by sensor 70 in order that the antenna beam pattern is still directed onto an optimum receive signal direction.

Steps 2164 to 2182 are executed in accordance with the correspondingly referenced steps of flowchart illustrated in Figure 21.

Although the use of a sensor 70 for identifying changes in orientation has been described with reference to a CDMA system, it will be evident to a person of ordinary skill in the art, that the same may be utilised for a "TDMA" system such as the GSM system, and incorporated in the flowchart illustrated in Figure 11 at suitable points. Optionally, sensor 70 may comprise an electronic compass and be capable of indicating an absolute direction with reference to magnetic north.

Embodiments of the invention may be enhanced by decoding the BCCH of base stations proximal to the current base station during the steps of measuring the signal strength. The strengths of the signals from the proximal base stations may be utilised to identify their position relative to the current base station, such information can then assist in prompt handover and beam formation for optimum signal with the new base station.

In view of the foregoing description it will be evident to a person skilled in the art that various modifications may be made within the scope of the invention. For example, although embodiments of the invention have been described with reference to a mobile station, embodiments of the invention may equally be incorporated in base stations. For such embodiments operable in a CDMA system, the delays in the RAKE receiver of the base station may be utilised to form respective antenna beams for communication with mobile stations using respective communication channels.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

## Claims

1. Radio apparatus for a radio communications system, the radio apparatus comprising:

   a directional beam antenna (58) having a plurality of antenna elements; and
   control circuitry (64) comprising means for determining signal quality and means for directing an antenna beam of said directional beam antenna, said control circuitry operable: in a first mode to determine a beam direction for a signal received by said directional beam antenna having optimum quality and to direct said antenna beam in said determined beam direction: in a second mode to scan received signal quality in a direction proximal to said beam direction and to update said beam direction for maintaining optimum signal quality; in a third mode to configure said directional beam antenna for omni-directional radiation.

2. Radio apparatus according to claim 1, wherein said proximal beam direction is adjacent said beam direction.

3. Radio apparatus according to claim 1 or 2, said control circuitry operable to switch from said second mode to said first mode if said update causes a change of beam direction exceeding a predetermined threshold.

4. Radio apparatus according to any preceding claim, further comprising means for determining a period of transmit inactivity or redundant information and operable to direct said antenna beam and monitor signal quality for said period of transmit inactivity or redundant information.

5. Radio apparatus according to claim 4, said means for determining said period of transmit inactivity or redundant data comprising speech processing means adapted to determine a period of voice inactivity.

6. Radio apparatus according to claims 4 or 5, said means for determining said period of transmit inactivity or redundant data comprising data processing means adapted to identify a signal representing an End of Data.

7. Radio apparatus according to any one of claims 1 to 6, said control circuitry further operable to direct said antenna beam in directions respectively corresponding to a plurality, including two, of sectors encompassing said directional beam antenna omni-directional beam pattern.

8. Radio apparatus according to claim 7, wherein said optimum signal beam direction and said proximal beam direction correspond to respective sectors.

9. Radio apparatus according to any preceding claim, operable to switch from said second mode to said first mode for a signal quality less than a threshold.

10. Radio apparatus according to any preceding claim, operable to switch from said second mode to said first mode for a rapid decrease in signal quality.

**11.** Radio apparatus according to any preceding claim, wherein said radio communications system is a cellular radio communications system and further comprising memory means for storing historic information regarding said beam direction for a first cell, the control circuitry being further operable to utilise said information to determine a beam direction for a second cell for handing over said radio apparatus from said first cell to said second cell.

**12.** Radio apparatus according to any one of claims 1 to 10, further comprising memory means for storing historic information regarding said beam direction, the control circuitry operable to extrapolate said historic information regarding said beam direction to determine a new beam direction.

**13.** Radio apparatus according to any preceding claim, operable for a time division multiplexed radio communications system, said control circuitry further operable in said second mode to monitor signal quality for said proximal beam direction during a transmit slot for said radio system.

**14.** Radio apparatus according to any one of claims 1 to 12, operable for a code division multiple access radio communications system and comprising a RAKE receiver, said control circuitry operable to derive an antenna beam pattern from correlation delay factors utilised in said RAKE receiver.

**15.** Radio apparatus according to any preceding claim, operable for a radio communications system comprising different transmit and receive carrier frequency, said control circuitry further configurable to adapt control of said directional beam antenna during a transmit mode dependent upon said beam direction determined during a receive mode.

**16.** Radio apparatus according to claim 15, operable for said third mode for registering said radio apparatus with said radio communications system.

**17.** Radio apparatus according to any preceding claim, further comprising a directional sensor for determining a change in direction of said radio apparatus.

**18.** Radio apparatus according to claim 17, operably coupled to said control circuitry to modify said beam direction responsive to and in accordance with said change in direction of said radio apparatus.

**19.** A radio communications device comprising a user interface including a display, a keypad or keyboard for inputting data to the communications device, a transceiver and an antenna and radio apparatus according to any preceding claim.

**20.** A base station for a cellular radio communications system comprising radio apparatus according to any one of claims 1 to 16.

**21.** A method of operating radio apparatus including a directional beam antenna (58) having a plurality of antenna elements for optimising received signal quality, the method comprising:

> in a first mode;

>> determining a beam direction for receiving a signal by said directional beam antenna having optimum quality, and directing said antenna beam in said beam direction, and

> in a second mode;

>> scanning received signal quality in a direction proximal to said beam direction, and updating said beam direction for maintaining optimum signal quality; and

> in a third mode;

>> configuring said directional beam antenna for omni-directional radiation.

**22.** A method according to claim 21 comprising, in said second mode, switching to said first mode if said update causes a change of beam direction exceeding a predetermined threshold.

**23.** A method according to claim 21, comprising in said first mode dividing the antenna radiation field into a plurality of, including 2, sectors,
Directing said antenna beam into respective sectors,
Measuring the received signal quality in respective sectors, and
Directing said antenna beam in said beam direction having optimum signal quality.

**24.** A method according to any one of claims 21 to 23, comprising, in said second mode, determining a period of transmit inactivity or redundant information, and directing said antenna beam and monitoring received signal quality for said period of transmit inactivity or redundant information.

**25.** A method according to claim 24, comprising, in said second mode, determining a period of voice inactivity, and directing said antenna beam and monitoring received signal quality for said period of voice inactivity.

**26.** A method according to claim 24 or 25, comprising, in said second mode, identifying a received signal representing an End of Data and directing said antenna beam and measuring signal quality in said proximal direction subsequent to said signal representing an End of Data.

**27.** A method according to any one of claims 21 to 26, comprising, in said second mode, switching to said first mode for a received signal quality less than the threshold level.

**28.** A method according to any one of claims 21 to 27, comprising, in said second mode, switching to said first mode for a rapid decrease in received signal quality.

**29.** A method according to any one of claims 21 to 28, operable for a cellular radio communication system, the method comprising storing historic information regarding beam direction for a first cell, and utilising said information to determine beam direction for a second cell for handing over said radio apparatus from said first cell to said second cell.

**30.** A method according to any one of claims 21 to 27, the method comprising storing historic information regarding said beam direction, and extrapolating said historic information regarding said beam direction to determine a new beam direction.

**31.** A method according to any one of claims 21 to 30, operable for a time division multiplex radio communication system and operable in said second mode to measure received signal quality for said proximal direction during a transmit slot for said radio system.

**32.** A method according to any one of claims 21 to 29, and operable for a code division multiple access radio communication system, the method comprising in said second mode utilising correlation delay factors from said RAKE receiver for deriving an antenna beam pattern.

**33.** A method according to any one of claims 21 to 31, and operable for a radio communications system comprising a different transmitter and receive carrier frequency, the method comprising adapting control of said directional beam antenna during a transmit mode dependent upon said beam direction determined during a receive mode.

**34.** A method according to any of claims 21 to 33, comprising, in said third mode, registering said radio apparatus with said radio communications system.

**35.** A method according to claim 34, comprising, in said second mode, modifying said beam direction responsive to, and in accordance with, a change in direction of said radio apparatus.

**36.** A radio communications device comprising radio apparatus according to any one of claims 1 to 20 or operable in accordance with any one of claims 21 to 35, further comprising a user interface including a display, a keypad or keyboard for inputting data and/or commands to said communications device, a transceiver and a directional beam antenna.

**37.** A radio telephone comprising a radio communications device according to claim 36.

**Patentansprüche**

**1.** Funkgerät für ein Funkkommunikationssystem, wobei das Funkgerät umfasst:

eine Richtstrahlantenne (58) mit einer Vielzahl von Antennenelementen; und Steuerschaltungen (64), umfassend Mittel zum Bestimmen der Signalgüte und Mittel zum Richten eines Antennenstrahls der Richtstrahlantenne, wobei die Steuerschaltungen betreibbar sind: in einem ersten Modus zum Bestimmen einer Strahlrichtung für ein durch die Richtstrahlantenne empfangenes Signal mit bester Güte und zum Richten des Antennenstrahls in die bestimmte Strahlrichtung: in einem zweiten Modus zum Abtasten der empfangenen Signalgüte in einer der Strahlrichtung naheliegenden Richtung und zum Aktualisieren der Strahlrichtung zum Aufrechterhalten der besten Signalgüte; in einem dritten Modus zum Einrichten der Richtstrahlantenne für Allrichtungsstrahlung.

**2.** Funkgerät nach Anspruch 1, wobei die naheliegende Strahlrichtung der Strahlrichtung benachbart ist.

**3.** Funkgerät nach Anspruch 1 oder 2, wobei die Steuerschaltungen zum Schalten aus dem zweiten Modus in den ersten Modus betreibbar sind, wenn die Aktualisierung eine einen vorbestimmten Schwellwert überschreitende Änderung der Strahlrichtung verursacht.

**4.** Funkgerät nach einem beliebigen vorhergehenden Anspruch, weiterhin umfassend Mittel zum Bestimmen einer Zeitdauer von Sendeuntätigkeit oder redundanter Information und betreibbar zum Richten des Antennenstrahls und Überwachen der Signalgüte für die Zeitdauer von Sendeuntätigkeit oder redundanter Information.

**5.** Funkgerät nach Anspruch 4, wobei die Mittel zum Bestimmen der Zeitdauer von Sendeuntätigkeit oder redundanten Daten Sprachverarbeitungsmittel, eingerichtet zum Bestimmen einer Zeitdauer von Sprachuntätigkeit, umfassen.

6. Funkgerät nach Anspruch 4 oder 5, wobei die Mittel zum Bestimmen der Zeitdauer von Sendeuntätigkeit oder redundanten Daten Datenverarbeitungsmittel, eingerichtet zum Identifizieren eines ein Ende von Daten darstellenden Signals, umfassen.

7. Funkgerät nach einem beliebigen der Ansprüche 1 bis 6, wobei die Steuerschaltungen weiterhin zum Richten des Antennenstrahls in jeweils einer Vielzahl, einschließlich zwei, von das Richtstrahlantennen-Allrichtungsstrahlenmuster umfassenden Sektoren entsprechenden Richtungen betreibbar sind.

8. Funkgerät nach Anspruch 7, wobei die beste Signalstrahlrichtung und die naheliegende Strahlrichtung jeweiligen Sektoren entsprechen.

9. Funkgerät nach einem beliebigen vorhergehenden Anspruch, betreibbar zum Umschalten aus dem zweiten Modus in den ersten Modus für eine geringere Signalgüte als ein Schwellwert.

10. Funkgerät nach einem beliebigen vorhergehenden Anspruch, betreibbar zum Umschalten aus dem zweiten Modus in den ersten Modus für eine schnelle Verringerung der Signalgüte.

11. Funkgerät nach einem beliebigen vorhergehenden Anspruch, wobei das Funkkommunikationssystem ein Zellularfunkkommunikationssystem ist und weiterhin Speichermittel zum Speichern von Vergangenheitsinformationen hinsichtlich der Strahlrichtung für eine erste Zelle umfasst, wobei die Steuerschaltungen weiterhin zum Nutzen der Informationen zum Bestimmen einer Strahlrichtung für eine zweite Zelle zum Weiterreichen des Funkgeräts aus der ersten Zelle in die zweite Zelle betreibbar sind.

12. Funkgerät nach einem beliebigen der Ansprüche 1 bis 10, weiterhin umfassend Speichermittel zum Speichern von Vergangenheitsinformationen hinsichtlich der Strahlrichtung, wobei die Steuerschaltungen zum Extrapolieren der Vergangenheitsinformationen hinsichtlich der Strahlrichtung zum Bestimmen einer neuen Strahlrichtung betreibbar sind.

13. Funkgerät nach einem beliebigen vorhergehenden Anspruch, betreibbar für ein Zeitmultiplex-Funkkommunikationssystem, wobei die Steuerschaltungen weiterhin in dem zweiten Modus zum Überwachen von Signalgüte für die naheliegende Strahlrichtung während eines Sendeschlitzes für das Funksystem betreibbar sind.

14. Funkgerät nach einem beliebigen der Ansprüche 1 bis 12, betreibbar für ein Codemultiplex-Vielfachzugriffs-Funkkommunikationssystem und umfassend einen RAKE-Empfänger, wobei die Steuerschaltungen zum Ableiten eines Antennenstrahlmusters aus in dem RAKE-Empfänger benutzten Korrelationslaufzeitfaktoren betreibbar sind.

15. Funkgerät nach einem beliebigen vorhergehenden Anspruch, betreibbar für ein Funkkommunikationssystem, umfassend eine unterschiedliche Sende- und Empfangsträgerfrequenz, wobei die Steuerschaltungen weiterhin zum Anpassen der Steuerung der Richtstrahlantenne während eines Sendemodus in Abhängigkeit von der während eines Empfangsmodus bestimmten Strahlrichtung einrichtbar sind.

16. Funkgerät nach Anspruch 15, betreibbar für den dritten Modus zum Registrieren des Funkgeräts bei dem Funkkommunikationssystem.

17. Funkgerät nach einem beliebigen vorhergehenden Anspruch, weiterhin umfassend einen Richtsensor zum Bestimmen einer Richtungsänderung des Funkgeräts.

18. Funkgerät nach Anspruch 17, betreibbar angekoppelt an die Steuerschaltungen zum Abändern der Strahlrichtung als Reaktion auf die und gemäß der Richtungsänderung des Funkgeräts.

19. Funkkommunikationsvorrichtung, umfassend eine Benutzeroberfläche mit einer Anzeige, einem Tastwahlblock oder einer Tastatur zum Eingeben von Daten in die Kommunikationsvorrichtung, einen Sender/Empfänger und eine Antenne und ein Funkgerät nach einem beliebigen vorhergehenden Anspruch.

20. Basisstation für ein Zellularfunkkommunikationssystem, umfassend das Funkgerät nach einem beliebigen der Ansprüche 1 bis 16.

21. Verfahren zum Betreiben eines Funkgeräts mit einer Richtstrahlantenne (58) mit einer Vielzahl von Antennenelementen zum Optimieren der empfangenen Signalgüte, wobei das Verfahren umfasst:

> in einem ersten Modus;
> Bestimmen einer Strahlrichtung zum Empfangen eines Signals durch die Richtstrahlantenne mit bester Güte,
> und
> Richten des Antennenstrahls in der Strahlrichtung, und
> in einem zweiten Modus;
> Abtasten der empfangenen Signalgüte in einer der Strahlrichtung naheliegenden Richtung, und

Aktualisieren der Strahlrichtung zum Aufrechterhalten der besten Signalgüte; und

in einem dritten Modus;

Einrichten der Richtstrahlantenne für Allrichtungsstrahlung.

22. Verfahren nach Anspruch 21, umfassend im zweiten Modus Umschalten in den ersten Modus, wenn die Aktualisierung eine einen vorbestimmten Schwellwert überschreitende Änderung der Strahlrichtung verursacht.

23. Verfahren nach Anspruch 21, umfassend im ersten Modus Aufteilen des Antennenstrahlungsfeldes in eine Vielzahl von, einschließlich von zwei, Sektoren, Richten des Antennenstrahls in jeweilige Sektoren, Messen der empfangenen Signalgüte in jeweiligen Sektoren, und

Richten des Antennenstrahls in die Strahlrichtung mit bester Signalgüte.

24. Verfahren nach einem beliebigen der Ansprüche 21 bis 23, umfassend im zweiten Modus Bestimmen einer Zeitdauer von Sendeuntätigkeit oder redundanter Information und Richten des Antennenstrahls und Überwachen der empfangenen Signalgüte für diese Zeitdauer von Sendeuntätigkeit oder redundanter Information.

25. Verfahren nach Anspruch 24, umfassend im zweiten Modus Bestimmen einer Zeitdauer von Sprachuntätigkeit und Richten des Antennenstrahls und Überwachen der empfangenen Signalgüte für diese Zeitdauer von Sprachuntätigkeit.

26. Verfahren nach Anspruch 24 oder 25, umfassend im zweiten Modus Identifizieren eines ein Ende von Daten darstellenden empfangenen Signals und Richten des Antennenstrahls und Messen der Signalgüte in der naheliegenden Richtung nach dem ein Ende von Daten darstellenden Signal.

27. Verfahren nach einem beliebigen der Ansprüche 21 bis 26, umfassend im zweiten Modus Umschalten in den ersten Modus für eine geringere empfangene Signalgüte als der Schwellwertpegel.

28. Verfahren nach einem beliebigen der Ansprüche 21 bis 27, umfassend im zweiten Modus Umschalten in den ersten Modus für eine schnelle Verringerung der empfangenen Signalgüte.

29. Verfahren nach einem beliebigen der Ansprüche 21 bis 28, betreibbar für ein Zellularfunkkommunikationssystem, wobei das Verfahren Speichern von Vergangenheitsinformationen hinsichtlich der Strahlrichtung für eine erste Zelle und Nutzen der Informationen zum Bestimmen der Strahlrichtung für eine zweite Zelle zum Weiterreichen des Funkgeräts aus der ersten Zelle in die zweite Zelle umfasst.

30. Verfahren nach einem beliebigen der Ansprüche 21 bis 27, wobei das Verfahren Speichern von Vergangenheitsinformationen hinsichtlich der Strahlrichtung, und

Extrapolieren der Vergangenheitsinformationen hinsichtlich der Strahlrichtung zum Bestimmen einer neuen Strahlrichtung umfasst.

31. Verfahren nach einem beliebigen der Ansprüche 21 bis 30, betreibbar für ein Zeitmultiplex-Funkkommunikationssystem und betreibbar in dem zweiten Modus zum Messen der empfangenen Signalgüte für die naheliegende Richtung während eines Sendeschlitzes für das Funksystem.

32. Verfahren nach einem beliebigen der Ansprüche 21 bis 29 und betreibbar für ein Codemultiplex-Vielfachzugriffs-Funkkommunikationssystem, wobei das Verfahren im zweiten Modus Nutzen von Korrelationslaufzeitfaktoren aus dem RAKE-Empfänger zum Ableiten eines Antennenstrahlmusters umfasst.

33. Verfahren nach einem beliebigen der Ansprüche 21 bis 31 und betreibbar für ein Funkkommunikationssystem, umfassend eine unterschiedliche Sende- und Empfangsträgerfrequenz, wobei das Verfahren Anpassen der Steuerung der Richtstrahlantenne während eines Sendemodus in Abhängigkeit von der während eines Empfangsmodus bestimmten Strahlrichtung umfasst.

34. Verfahren nach einem beliebigen der Ansprüche 21 bis 33, umfassend in dem dritten Modus Registrieren des Funkgeräts bei dem Funkkommunikationssystem.

35. Verfahren nach Anspruch 34, umfassend in dem zweiten Modus Abändern der Strahlrichtung als Reaktion auf eine und gemäß einer Richtungsänderung des Funkgeräts.

36. Funkkommunikationsvorrichtung, umfassend ein Funkgerät nach einem beliebigen der Ansprüche 1 bis 20 oder betreibbar nach einem beliebigen der Ansprüche 21 bis 35, weiterhin umfassend eine Benutzeroberfläche mit einer Anzeige, einem Tastwahlblock oder einer Tastatur zum Eingeben von Daten und/oder Befehlen in die Kommunikationsvorrichtung, einen Sender/Empfänger und eine Richtstrahlantenne.

37. Funktelefon, umfassend eine Funkkommunikationsvorrichtung nach Anspruch 36.

## Revendications

1. Poste de radio pour un système de radiocommunication, le poste de radio comprenant :

   une antenne à faisceau directionnel (58) comportant une pluralité d'éléments d'antenne ; et des circuits de commande (64) comprenant un moyen permettant de déterminer la qualité du signal et un moyen permettant de diriger un faisceau d'antenne de ladite antenne à faisceau directionnel, lesdits circuits de commande pouvant servir : dans un premier mode, à déterminer une direction de faisceau pour un signal reçu par ladite antenne à faisceau directionnel ayant une qualité optimale, et à diriger ledit faisceau d'antenne dans ladite direction de faisceau déterminée; dans un deuxième mode, à examiner la qualité du signal reçu dans une direction proximale à ladite direction de faisceau et à actualiser ladite direction de faisceau afin de maintenir une qualité optimale du signal ; dans un troisième mode, à configurer ladite antenne à faisceau directionnel pour un rayonnement omnidirectionnel.

2. Poste de radio selon la revendication 1, dans lequel ladite direction proximale du faisceau est adjacente à ladite direction de faisceau.

3. Poste de radio selon la revendication 1 ou 2, lesdits circuits de commande pouvant servir à commuter dudit deuxième mode vers ledit premier mode si ladite actualisation provoque un changement de direction de faisceau dépassant un seuil prédéterminé.

4. Poste de radio selon l'une quelconque des revendications qui précèdent, comprenant par ailleurs un moyen permettant de déterminer une période d'inactivité de transmission ou d'informations redondantes et pouvant servir à diriger ledit faisceau d'antenne et à surveiller la qualité du signal pendant ladite période d'inactivité de transmission ou d'informations redondantes.

5. Poste de radio selon la revendication 4, ledit moyen permettant de déterminer ladite période d'inactivité de transmission ou de données redondantes comprenant un moyen de traitement vocal adapté pour déterminer une période d'inactivité vocale.

6. Poste de radio selon les revendications 4 ou 5, ledit moyen permettant de déterminer ladite période d'inactivité de transmission ou de données redondantes comprenant un moyen de traitement de données apte à identifier un signal représentant une Fin de Données.

7. Poste de radio selon l'une quelconque des revendications 1 à 6, lesdits circuits de commande pouvant servir par ailleurs à diriger ledit faisceau d'antenne vers des directions correspondant respectivement à une pluralité de secteurs, y compris deux, comprenant le diagramme ominidirectionnel du faisceau de ladite antenne à faisceau directionnel.

8. Poste de radio selon la revendication 7, dans lequel ladite direction optimale du faisceau de signal et ladite direction proximale du faisceau correspondent à des secteurs respectifs.

9. Poste de radio selon l'une quelconque des revendications qui précèdent, qui peut servir à commuter dudit deuxième mode vers ledit premier mode pour une qualité de signal inférieure à un seuil.

10. Poste de radio selon l'une quelconque des revendications qui précèdent, qui peut servir à commuter dudit deuxième mode vers ledit premier mode pour une diminution rapide de la qualité du signal.

11. Poste de radio selon l'une quelconque des revendications qui précèdent, dans lequel ledit système de radiocommunication est un système de radiocommunication cellulaire et comprenant par ailleurs un moyen de mémoire pour sauvegarder des informations historiques concernant ladite direction de faisceau pour une première cellule, le circuit de commande pouvant servir par ailleurs à utiliser lesdites informations afin de déterminer une direction de faisceau pour une seconde cellule, afin de transférer ledit poste de radio de ladite première cellule vers ladite seconde cellule.

12. Poste de radio selon l'une quelconque des revendications 1 à 10, comprenant par ailleurs un moyen de mémoire pour sauvegarder des informations historiques concernant ladite direction de faisceau, le circuit de commande pouvant servir à extrapoler lesdites informations historiques concernant ladite direction de faisceau afin de déterminer une nouvelle direction de faisceau.

13. Poste de radio selon l'une quelconque des revendications qui précèdent, pouvant servir à un système de radiocommunication par multiplexage par répartition dans le temps, lesdits circuits de commande pouvant par ailleurs fonctionner dans ledit deuxième mode pour surveiller la qualité du signal pour ladite direction proximale du faisceau durant une tranche de transmission pour ledit système radio.

14. Poste de radio selon l'une quelconque des revendications 1 à 12, pouvant servir à un système de radiocommunication à accès multiple par différence de code et comprenant un récepteur RAKE, lesdits circuits de commande pouvant servir à obtenir un diagramme du faisceau d'antenne à partir de coefficients de retard par corrélation utilisés dans ledit récepteur RAKE.

**15.** Poste de radio selon l'une quelconque des revendications qui précèdent, pouvant servir à un système de radiocommunication comprenant une fréquence porteuse d'émetteur et de récepteur différente, lesdits circuits de commande étant configurables par ailleurs pour adapter la commande de ladite antenne à faisceau directionnel durant un mode de transmission qui dépend de ladite direction de faisceau déterminée durant un mode de réception.

**16.** Poste de radio selon la revendication 15, pouvant servir, audit troisième mode, à enregistrer ledit poste de radio avec ledit système de radiocommunication.

**17.** Poste de radio selon l'une quelconque des revendications qui précèdent, comprenant par ailleurs un capteur directionnel pour déterminer un changement de direction dudit poste de radio.

**18.** Poste de radio selon la revendication 17, pouvant être couplé de façon opérable avec lesdits circuits de commande pour modifier ladite direction de faisceau en réaction à et en conformité avec ledit changement de direction dudit poste de radio.

**19.** Dispositif de radiocommunication comprenant une interface utilisateur comportant un écran, un pavé numérique ou un clavier pour saisir des données dans le dispositif de communication, un émetteur-récepteur et une antenne, et poste de radio selon l'une quelconque des revendications qui précèdent.

**20.** Station de base pour un système de radiocommunication cellulaire comprenant un poste de radio selon l'une quelconque des revendications 1 à 16.

**21.** Méthode d'utilisation d'un poste de radio comprenant une antenne à faisceau directionnel (58) comportant une pluralité d'éléments d'antenne pour optimiser la qualité du signal reçu, la méthode consistant :

dans un premier mode ;
à déterminer une direction de faisceau pour recevoir un signal par ladite antenne à faisceau directionnel dont la qualité est optimale, et
à diriger ledit faisceau d'antenne dans ladite direction de faisceau, et
dans un deuxième mode ;
à déterminer la qualité du signal reçu dans une direction proximale à ladite direction de faisceau,
et

à actualiser ladite direction de faisceau pour maintenir une qualité optimale du signal ; et
dans un troisième mode;
à configurer ladite antenne à faisceau directionnel pour un rayonnement omnidirectionnel.

**22.** Méthode selon la revendication 21 comprenant, dans ledit deuxième mode, la commutation vers ledit premier mode si ladite actualisation provoque un changement de direction de faisceau dépassant un seuil prédéterminé.

**23.** Méthode selon la revendication 21, comprenant dans ledit premier mode divisant le champ de rayonnement de l'antenne en une pluralité de secteurs, y compris 2 secteurs,
dirigeant ledit faisceau d'antenne vers des secteurs respectifs,
mesurant la qualité du signal reçu dans des secteurs respectifs, et
dirigeant ledit faisceau d'antenne vers ladite direction de faisceau où la qualité du signal est optimale.

**24.** Méthode selon l'une quelconque des revendications 21 à 23, consistant, dans ledit deuxième mode, à déterminer une période d'inactivité de transmission ou d'informations redondantes, à diriger ledit faisceau d'antenne et à surveiller la qualité du signal reçu pendant ladite période d'inactivité de transmission ou d'informations redondantes.

**25.** Méthode selon la revendication 24, consistant, dans ledit deuxième mode, à déterminer une période d'inactivité vocale, à diriger ledit faisceau d'antenne et à surveiller la qualité du signal reçu pendant ladite période d'inactivité vocale.

**26.** Méthode selon la revendication 24 ou 25, consistant, dans ledit deuxième mode, à identifier un signal reçu représentant une Fin de Données, à diriger ledit faisceau d'antenne et à mesurer la qualité du signal dans ladite direction proximale subséquente audit signal représentant une Fin de Données.

**27.** Méthode selon l'une quelconque des revendications 21 à 26, consistant, dans ledit deuxième mode, à commuter vers ledit premier mode pour une qualité du signal reçu inférieure au niveau seuil.

**28.** Méthode selon l'une quelconque des revendications 21 à 27, consistant, dans ledit deuxième mode, à commuter vers ledit premier mode pour une diminution rapide de la qualité du signal reçu.

**29.** Méthode selon l'une quelconque des revendications 21 à 28, pouvant servir dans un système de radiocommunication cellulaire, la méthode comprenant la sauvegarde d'informations historiques concernant la direction de faisceau pour une première cellule, et utilisant lesdites informations afin de déterminer la direction de faisceau pour une seconde cellule afin de transférer ledit poste de radio de ladite première cellule vers ladite seconde cellule.

**30.** Méthode selon l'une quelconque des revendications 21 à 27, la méthode consistant à sauvegarder des informations historiques concernant ladite direction de faisceau, et

à extrapoler lesdites informations historiques concernant ladite direction de faisceau afin de déterminer une nouvelle direction de faisceau.

**31.** Méthode selon l'une quelconque des revendications 21 à 30, pouvant être utilisée dans un système de radiocommunication par multiplexage par répartition dans le temps et pouvant servir dans ledit deuxième mode à mesurer la qualité du signal reçu pour ladite direction proximale durant une tranche de transmission pour ledit système radio.

**32.** Méthode selon l'une quelconque des revendications 21 à 29, et pouvant être utilisée dans un système de radiocommunication à accès multiple par différence de code, la méthode comprenant dans ledit deuxième mode l'utilisation de coefficients de retard par corrélation provenant dudit récepteur RAKE pour obtenir un diagramme du faisceau d'antenne.

**33.** Méthode selon l'une quelconque des revendications 21 à 31, et pouvant être utilisée dans un système de radiocommunication, comprenant une fréquence porteuse d'émetteur et de récepteur différente, la méthode consistant à adapter la commande de ladite antenne à faisceau directionnel durant un mode de transmission qui dépend de ladite direction de faisceau déterminée durant un mode de réception.

**34.** Méthode selon l'une quelconque des revendications 21 à 33, consistant, dans ledit troisième mode, à enregistrer ledit poste de radio avec ledit système de radiocommunication.

**35.** Méthode selon la revendication 34, consistant, dans ledit deuxième mode, à modifier ladite direction de faisceau en réaction à et en conformité avec un changement de direction dudit poste de radio.

**36.** Dispositif de radiocommunication comprenant un poste de radio selon l'une quelconque des revendications 1 à 20 ou pouvant être utilisé selon l'une quelconque des revendications 21 à 35, comprenant par ailleurs une interface utilisateur comportant un écran, un pavé numérique ou un clavier pour saisir des données et/ou des commandes dans ledit dispositif de communication, un émetteur-récepteur et une antenne à faisceau directionnel.

**37.** Radiotéléphone comprenant un dispositif de radiocommunication selon la revendication 36.

Fig. 1

Fig. 2

Fig. 3

**400**

58 ANTENNA

LNA/Filter

1st Mixer 426

IF

2nd Mixer/demod 430

Audio filter IC 432

Audio PA 434

Speaker

436

424

LO

428    240

RF PA 420

418

416

VCO

Synthesizer

412

Preamp

410 Mic.

408

422

406

414

VOX Detector

404

Control

**Fig. 4**

EP 1 069 706 B1

Fig. 5

Fig. 7

$$y(\xi=\frac{2\pi d}{\lambda}\sin\theta)$$

Fig. 6

EP 1 069 706 B1

1 TDMA frame
= 8 timeslots (60/13 ms)

| 0 | 1 | 2 | 3 | 4 | 5 | 6 | 7 |

(a)

1(26 frame) multiframe
=26 TDMA frames (120 ms)

| 0 | 1 | 2 | 3 | – – – – – – | 22 | 23 | 24 | 25 |

(b)

1(51 frame) multiframe
=51 TDMA frames (3060/13 ms)

| 0 | 1 | 2 | 3 | – – – – – – | 47 | 48 | 49 | 50 |

(c)

26 time frames

| T1 | T2 | – – – | T10 | T11 | A | T12 | T13 | T14 | – – – | T23 | I |

(d)

51 time frames

| F | S | B | B | B | B | C | C | C | C | – – | F | S | C | C | C | C | C | C | C | C | – – | F | S | C | C | C | C | C | C | C | I |

(e)

Fig. 8

Fig. 9

Fig. 10 Block Diagram of the Adaptive Array System

EP 1 069 706 B1

## FLOW DIAGRAM FOR THE SET UP AND CONTROL OF THE STEERABLE ANTENNA

(1102) START

1104 SET GAINS AND PHASES OF 1 THROUGH N OF 60 FOR OMNI DIRECTIONAL BEAM PATTERN Fig. 12 (a)

1106 DECODE BCCH SIGNALS

1108 SET CARRIER FREQUENCY TO SELECTED BASE STATION

1110 MEASURE SIGNAL STRENGTH STORE VALUE = N

No — 1112 IS SID FRAME PRESENT
Yes

1114 SET GAIN AND PHASE DIFFERENCES 1 THROUGH N OF 60 FOR BEAM WIDTH FROM 0 TO 180 DEG. SET X=90 (FIG 12 (b))

1116 MEASURE SIGNAL STRENGTH STORE VALUE = Mx

Yes — 1118 IS Mx > N
No

1120 SET GAIN AND PHASE DIFFERENCES 1 THROUGH N OF 60 FOR BEAM WIDTH FROM 180 TO 360 DEG. SET X=270 (FIG 12 (c))

1122 MEASURE SIGNAL STRENGTH STORE VALUE = Mx

No — 1124 IS Mx > N
Yes

1126 SET N = VALUE Mx

1128 SET GAIN AND PHASE DIFFERENCES 1 THROUGH N OF 60 FOR BEAM WIDTH FROM X-90 TO X. SET X=X-45 (FIG 12 (d))

1130 MEASURE SIGNAL STRENGTH STORE VALUE = Mx

Yes — 1132 IS Mx > N
No

1134 SET GAIN AND PHASE DIFFERENCES 1 THROUGH N OF 60 FOR BEAM WIDTH FROM X TO X+90. SET X=X+45 (FIG 12 (E))

1136 MEASURE SIGNAL STRENGTH STORE VALUE = Mx

No — 1138 IS Mx > N
Yes

(A)    (A)

## Fig. 11(a)

FLOW DIAGRAM FOR THE SET UP AND CONTROL OF THE STEERABLE ANTENNA

Fig. 11(b)

## Beam Profile OMNI

90 DEG

~102

0 DEG                    180 DEG

104

270 DEG

BASE STATION

Fig. 12(a)

## Beam Profile 0-180 DEG.: X = 90

90 DEG

~102

0 DEG                    180 DEG

104

270 DEG

BASE STATION

Fig. 12(b)

## Beam Profile 180 - 360 DEG.: X = 270

90 DEG

0 DEG

180 DEG

102

104

BASE STATION

270 DEG

Fig. 12(c)

## Beam Profile X-90 TO X DEG.

90 DEG

0 DEG

180 DEG

102

104

BASE STATION

270 DEG

Fig. 12(d)

## Beam Profile X TO X+90 DEG.

90 DEG

0 DEG ——————————————————————— 180 DEG

102

270 DEG

104 ⟍

BASE STATION

## Fig. 12(e)

## Beam Realignment (Step 1: Identify SID Frame)

90 DEG

180 DEG

0 DEG

102

104

BEAM SETTING X
270 DEG.

270 DEG

BASE STATION

Change in
Orientation

## Fig. 13(a)

## Beam Realignment (Step 2 Negative Swing)

90 DEG

180 DEG

~102

0 DEG

-30 DEG.

104

BASE STATION

BEAM SETTING X

270 DEG

Change in
Orientation

### Fig. 13(b)

## Beam Realignment (Step 3 Positive Swing)

90 DEG

180 DEG

~102

0 DEG

+30 DEG.

NEW BEAM
SETTING

ORIGINAL BEAM
SETTING

104

BASE STATION

270 DEG

Change in
Orientation

### Fig. 13(c)

Fig. 14

Fig. 15

## Beam Pattern with $T_2$ $T_1$ & $T_0$ Approximately Equal

90 DEG

0 DEG

**102**

180 DEG

**1601**

REFLECTOR

$T_1$

**104**

$T_0$

270 DEG

$T_2$

BASE STATION

**1602** REFLECTOR

**Fig. 16**

## Beam Pattern with $T_2$ $T_1$ & $T_0$ Similar

**1603**

90 DEG

REFLECTOR

**102**

0 DEG

180 DEG

$T_1$

**104**

$T_0$

$T_2$

270 DEG

BASE STATION

**1604** REFLECTOR

**Fig. 17**

## Beam Pattern with $T_1 > T_2 > T_0$

Fig. 18

## Beam Pattern with $T_1 > T_2 > T_0$

Fig. 19

Beam Pattern with $T_1$ & $T_2$ Similar and Larger than $T_0$

Fig. 20

FLOW DIAGRAM FOR SET UP AND CONTROL OF STEERABLE ANTENNA FOR CDMA SYSTEM

2102 ◯ START

2104 | SET X = 0

2106 | SET GAINS AND PHASES OF 1 THROUGH N OF 60
FOR OMNI DIRECTIONAL BEAM PATTERN (Fig. C1)

2108 | DECODE SYNCHRONIZATION SIGNALS
DEFINE T0 FOR SYNCHRONIZATION

Fig. C1

2110 | SET SPREADING SEQUENCE TO THAT
DEFINED BY BASE STATION

2112 | MEASURE SIGNAL STRENGTH FROM RAKE RECEIVER
STORE VALUE = N
SET SPREADING FACTOR A

— No — ⟨2114⟩ IS SID FRAME OR END OF PACKET FOOTER PRESENT?

Yes

2116 | SET GAIN AND PHASE DIFFERENCES 1 THROUGH N OF 60
FOR BEAM WIDTH FROM 0 TO 180 DEG. (Fig. C2)

0 DEG.

2118 | MEASURE SIGNAL STRENGTH FROM RAKE RECEIVER
STORE VALUE = Mx

Fig. C2

— Yes — ⟨2120⟩ IS Mx > N

No

180 DEG.

2122 | SET X = X +180 (Fig. C3)

Fig. C3

2124 | MEASURE SIGNAL STRENGTH FROM RAKE RECEIVER
STORE VALUE = Mx

— No — ⟨2126⟩ IS Mx > N

Fig. 21(a)

| 2128 | SET N = VALUE Mx |

| 2130 | IS I $T_1$ - $T_0$ I OR I $T_2$ - $T_0$ I < CHIP DURATION * A |

Yes ← 2130

90 DEG.

Fig. C4

No

| 2132 | SET X = X - 90 (Fig. C4) |

| 2134 | MEASURE SIGNAL STRENGTH FROM RAKE RECEIVER STORE VALUE = Mx |

Yes ← | 2136 | IS Mx > N |

No

270 DEG.

Fig. C5

| 2138 | SET X = X +180 (Fig. C5) |

| 2140 | MEASURE SIGNAL STRENGTH FROM RAKE RECEIVER STORE VALUE = Mx |

No ← | 2142 | IS Mx > N |

Yes

| 2144 | SET N = VALUE Mx |

Fig. 21(b)

Fig. C6

Fig. C7

| 2146 | SET N = VALUE Mx |

| 2148 | SET GAIN AND PHASE DIFFERENCES 1 THROUGH N OF 60 FOR BEAM WIDTH FROM X-90 TO X DEG. SET X = X-45 (Fig. C6). |

| 2150 | MEASURE SIGNAL STRENGTH STORE VALUE = Mx |

Yes ← 2152   IS Mx > N

No

| 2154 | SET GAIN AND PHASE DIFFERENCES 1 THROUGH N OF 60 FOR BEAM WIDTH FROM X + 45 TO X +115 DEG. SET X = X + 90 (Fig. C7) |

| 2156 | MEASURE SIGNAL STRENGTH STORE VALUE = Mx |

No — 2158   IS Mx > N

Yes

| 2160 | SET N = VALUE Mx |

Yes — 2162   IS THERE A CHANGE IN BASE STATION OR A CHANGE IN SPREADING SEQUENCE

No

No — 2164   IS SID FRAME OR END OF PACKET FRAME PRESENT

Yes

| 2166 | SET X TO X - 30 DEG. |

| 2168 | MEASURE SIGNAL STRENGTH FROM RAKE RECEIVER STORE VALUE = Mx - 30 |

Fig. 21(c)

44

Fig. 21(d)

FLOW DIAGRAM FOR SET UP AND CONTROL OF STEERABLE ANTENNA FOR CDMA SYSTEM
WITH SENSOR FOR DETECTING CHANGES IN DIRECTION (Dt)

(2102) START

2202 SET X =$D_{10}$ (DIRECTION OF MOBILE AT TIME ZERO)

2106 SET GAINS AND PHASES OF 1 THROUGH N OF 60
FOR OMNI DIRECTIONAL BEAM PATTERN (Fig. S1)

Fig. S1

2108 DECODE SYNCHRONIZATION SIGNALS
DEFINE T0 FOR SYNCHRONIZATION

2110 SET SPREADING SEQUENCE TO THAT
DEFINED BY BASE STATION

2112 MEASURE SIGNAL STRENGTH FROM RAKE RECEIVER
STORE VALUE = N
SET SPREADING FACTOR A

No — 2114 IS SID FRAME OR END OF PACKET FOOTER PRESENT?

Yes

2116 SET GAIN AND PHASE DIFFERENCES 1 THROUGH N OF 60
FOR BEAM WIDTH FROM 0 TO 180 DEG. (Fig. S2)

0 DEG.

Fig. S2

2118 MEASURE SIGNAL STRENGTH FROM RAKE RECEIVER
STORE VALUE = Mx

Yes — 2120 IS Mx > N

No

2122 SET X = X +180 (Fig. S3)

180 DEG.

Fig. S3

2124 MEASURE SIGNAL STRENGTH FROM RAKE RECEIVER
STORE VALUE = Mx

No — 2126 IS Mx > N

Fig. 22(a)

**2128** SET N = VALUE Mx

**2130** Yes — IS $|T_1 - T_0|$ OR $|T_2 - T_0|$ < CHIP DURATION * A

No

90 DEG.

Fig. S4

**2132** SET X = X - 90 (Fig. S4)

**2134** MEASURE SIGNAL STRENGTH FROM RAKE RECEIVER STORE VALUE = Mx

**2136** Yes — IS Mx > N

No

270 DEG.

Fig. S5

**2138** SET X = X +180 (Fig. S5)

**2140** MEASURE SIGNAL STRENGTH FROM RAKE RECEIVER STORE VALUE = Mx

**2142** No — IS Mx > N

Yes

**2144** SET N = VALUE Mx

## Fig. 22(b)

Fig. S6

**2146** SET N = VALUE Mx

**2148** SET GAIN AND PHASE DIFFERENCES 1 THROUGH N OF 60 FOR BEAM WIDTH FROM X-90 TO X DEG.
SET X = X-45 (Fig. S6).

**2150** MEASURE SIGNAL STRENGTH
STORE VALUE = Mx

—Yes— **2152** IS Mx > N

No

**2154** SET GAIN AND PHASE DIFFERENCES 1 THROUGH N OF 60 FOR BEAM WIDTH FROM X + 45 TO X +115 DEG.
SET X = X + 90 (Fig. S7)

**2156** MEASURE SIGNAL STRENGTH
STORE VALUE = Mx

No — **2158** IS Mx > N

Yes

**2160** SET N = VALUE Mx

**2204** MEASURE Rd = I (D$_{11}$ + D$_{10}$) I

—Yes— **2162** IS THERE A CHANGE IN BASE STATION OR A CHANGE IN SPREADING SEQUENCE OR Rd > 60 DEG.

No

**2206** SET X = X - (D$_{11}$ - D$_{10}$)

— No — **2164** IS SID FRAME OR END OF PACKET FRAME PRESENT

Fig. 22(c)

Fig. 22(d)

**EP 1 069 706 B1**

**Patent documents cited in the description**

- US 5303240 A
- US 5304240 A
- WO 9608850 A
- WO 9744978 A